# NEUE EUROPÄISCHE PATENTSCHRIFT

(11) **EP 0 542 105 B2**
(45) Veröffentlichungstag und Bekanntmachung des Hinweises auf die Entscheidung über den Einspruch: **11.04.2007**
(45) Hinweis auf die Patenterteilung: 24.01.1996
(21) Anmeldenummer: 92118831.4
(22) Anmeldetag: 03.11.1992
(51) Int. Cl.: C08G 18/42, C08G 18/40, C08G 18/72, C08G 18/08, C09D 175/06

(54) **Wässrige Bindemittelkombination, ein Verfahren zu ihrer Herstellung und ihre Verwendung**
Aqueous binder combination, process for its preparation and its use
Combinaison aqueuse de liants, procédé de sa préparation et son utilisation

(30) Priorität: 14.11.1991 DE 4137429
(43) Veröffentlichungstag der Anmeldung: 19.05.1993
(73) Patentinhaber: BAYER AG, 51368 Leverkusen (DE)
(72) Erfinder: Blum, Harald, Dr., W-4175 Wachtendonk 2 (DE); Kubitza, Werner, Dipl.-Ing., W-5090 Leverkusen 3 (DE); Probst, Joachim, Dr., W-5090 Leverkusen (DE); Sonntag, Michael, Dr., W-5068 Odenthal 3 (DE); Schneider, Volker, Dr., W-4175 Wachtendonk 1 (DE)

(56) Entgegenhaltungen:
- EP-A- 0 358 979
- EP-A- 0 496 205
- EP-A- 0 537 568
- EP-A- 0 542 085
- WO-A-93/05087
- WO-A-93/09157
- US-A- 4 382 114
- US-A- 4 578 426
- US-A- 5 075 370
- W.M. Morgans, Outlines of Paint Technology, C. Griffin & Co. Ltd., London, 1982, Vol. 1, pp. 226-7
- G.P.A. Turner, Introduction to paint chemistry and principles of paint technology, 3rd Ed. (1988) p. 109-110

## Beschreibung

Die Erfindung betrifft eine wäßrige Bindemittelkombination auf Basis von Mischungen in Wasser dispergierbarer bzw. lösbarer Polyolkomponenten, bestehend aus mindestens zwei unterschiedlichen Hydroxylgruppen aufweisenden Polymeren auf Polyester- und/oder Polymerisatbasis sowie Polyisocyanaten, ein Verfahren zur Herstellung solcher Bindemittelkombinationen und deren Verwendung als Bindemittel in Lacken, Beschichtungs- und Dichtmassen.

In der Oberflachen-Technologie spielen ökologische Fragen eine bedeutende Rolle. Ein besonders vordringliches Problem ist die Reduzierung der für Lacke und Beschichtungsstoffe verwendeten Mengen organischer Lösemittel.

Bei chemisch vernetzenden Polyurethanlacken, die aufgrund ihrer hervorragenden Eigenschaften auf dem Beschichtungssektor eine große Bedeutung haben, konnte bis in die jüngste Vergangenheit auf organische Lösemittel nicht verzichtet werden. Die Verwendung von Wasser anstelle von organischen Lösungsmitteln in Zweikomponenten-Polyurethanlacken auf Basis von Polyisocyanaten mit freien Isocyanatgruppen schien lange Zeit nicht möglich, da bekannt ist, daß Isocyanatgruppen nicht nur mit alkoholischen Hydroxylgruppen sondern auch mit Wasser reagieren. Außerdem ist natürlich die Konzentration an, vom Wasser herrührenden, aktiven Wasserstoffatomen in derartigen Systemen weit höher als die Konzentration an Hydroxylgruppen der organischen, NCO-reaktiven Komponente, so daß davon ausgegangen werden muß, daß in dem ternären System Polyisocyanat/organische Polyhydroxylverbndung/Wasser vor allem eine Isocyanat-Wasser-Reaktion unter Harnstoff- und Kohlendioxidbildung abläuft, die einerseits nicht zur Vernetzung der organischen Polyhydroxylverbindungen und andererseits zur Schäumung des Lackenansatzes aufgrund der Kohlendioxidbildung führt.

Erst in jüngerer Zeit wurde bekannt (DE-OS 38 29 587), ausgewählte Polyhydroxypolyacrylate mit Polyisocyanaten, die freie Isocyanatgruppen aufweisen, zu wäßrigen Zweikomponentensystemen zu kombinieren. Diese Beschichtungsmittel weisen eine Topfzeit von mehreren Stunden auf und harten zu hochwertigen, vernetzten Filmen aus, die bezüglich ihres Eigenschaftsniveaus mit den bislang aus lösungsmittelhaltigen Zweikomponenten-Polyurethanlacken erhaltenen Lackfilmen vergleichbar sind.

Es wurde nun gefunden, daß auch Kombinationen von wäßrigen Polymerpolyolen, bestehend aus mindestens zwei verschiedenen, Hydroxylgruppen aufweisenden Polymeren auf Polyester und/oder Polymerisatbasis sowie Polyisocyanaten mit freien Isocyanatgruppen als Lackbindemittel eingesetzt werden können, die die Herstellung von Lacken mit langer Verarbeitungszeit, hervorragendem Verlauf bei der Filmbildung und guter Pigmentbenetzbarkeit gestatten.

Gegenstand der Erfindung ist somit eine wäßrige Bindemittelkombination gemäß Patentanspruch 1.

Gegenstand der Erfindung ist auch ein Verfahren zur Herstellung einer derartigen wäßrigen Bindemittelkombination, welches dadurch gekennzeichnet ist, daß man in einer wäßrigen Lösung oder Dispersion einer Polyolkomponente, die ein Gemisch aus mindestens zwei Einzelkomponenten ausgewählt aus A1), A2), A3), A4) und A5) der obengenannten Art darstellt, eine Polyisocyanatkomponenten einer Viskosität bei 23°C von 50 bis 10 000 mPa.s, bestehend aus mindestens einem organischen Polyisocyanat, emulgiert, wobei die Mengenverhältnisse der beiden Komponenten einem NCO/OH-Äquivalentverhältnis, bezogen auf die Isocyanatgruppen der Polyisocyanatkomponente und die Hydroxylgruppen der Polyolkomponente, von 0,2:1 bis 5:1 entsprechen und wobei die gegebenenfalls mitverwendeten Hilfs- und Zusatz- und gegebenenfalls reaktiven Verdünnungsmittel der Polyollösung und/oder -dispersion vor der Zugabe der Polyisocyanatkomponente einverleibt worden sind.

Gegenstand der Erfindung ist auch die Verwendung der erfindungswesentlichen Bindemittelkombinationen als Bindemittel für Lacke, Beschichtungs- und Dichtmassen, sowie für Klebstoffe.

Die Komponente A) stellt eine wäßrige Lösung oder Dispersion (im allgemeinen liegen sowohl gelöste als auch : dispergierte Teilchen gleichzeitig vor) einer Polyolkomponente, die ihrerseits eine Mischung darstellt. Die wäßrige Lösung oder Dispersion weist im allgemeinen einen Wassergehalt von 35 bis 80, vorzugsweise 45 bis 70 Gew.-% auf.

Die Polyolmischungen, die in der Komponente A) gelöst und/oder dispergiert vorliegen bestehen im wesentlichen aus mindestens zwei Hydroxylgruppen aufweisenden Polymeren, ausgewählt aus unterschiedlichen Gruppen A1), A2), A3), A4) und A5), wobei in diesen Gemischen mindestens zwei Hydroxylgruppen aufweisende Polymere aus unterschiedlichen Gruppen zu jeweils mindestens 5 Gew.-%, vorzugsweise jeweils mindestens 15 Gew.-%, bezogen auf das Gesamtgewicht des Gemischs vorliegen müssen.

Es ist auch möglich, mehrere, Hydroxylgruppen aufweisende Polymere aus einer der genannten Gruppen A1) bis A5) zu verwenden, vorausgesetzt, in dem Gemisch sind mindestens zwei der genannten Gruppen in der angegebenen Mindestmenge vertreten. Obwohl weniger bevorzugt, ist es grundsätzlich auch möglich, zusätzlich weitere hydroxyfunktionelle Polymere, beispielsweise auf Polyether-, Polyurethan- undloder Polyepoxidbasis oder auch Reaktivverdünner, d.h. insbesondere wasserlösliche mehrwertige Alkohole des Molekulargewichtsbereichs 62 bis 200 wie Ethylenglykol, Glycerin und/oder Trimethylolpropan mitzuverwenden.

Die Komponente A1) umfaßt Urethan-, Carboxylat- und Hydroxylgruppen enthaltende Polyesterharze, die vorzugsweise ein nach der Gelpermeationschromatographie unter Verwendung von geeichtem Polystyrol als Standard bestimmbares Molekulargewicht Mw (Gewichtsmittel) von 3000 bis 100 000, insbesondere von 6000 bis 50 000, eine Hydroxylzahl von 20 bis 240, vorzugsweise von 45 bis 190 mg KOH/g Substanz, eine Säurezahl (bezogen auf alle Carboxylgruppen, die dabei zu 25 bis 100, vorzugsweise zu 40 bis 100 % in der Salzform, d.h. in der Carboxylatform vorliegen) von 8 bis 60, vorzugsweise von 11 bis 40 mg KOH/g Substanz und einem Urethangruppengehalt 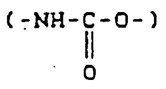 von 1,0 bis 15,0, vorzugsweise von 4,0 bis 12,5 Gew.-% aufweisen, wobei die Werte für Hydroxylzahl, Säurezahl und Urethangruppengehalt sich jeweils auf Festharz beziehen.

Die Komponente A1) kommt bei der Herstellung der erfindungsgemäßen Bindemittelkombination im allgemeinen in Form von 20 bis 65, vorzugsweise von 30 bis 55 gew.- %igen wäßrigen Lösungen bzw. Dispersionen zum Einsatz, die im allgemeinen eine Viskosität von 10 bis 30 000, vorzugsweise von 50 bis 10 000 mPa.s bei 23°C und pH-Werte von 3 bis 10, vorzugsweise von 6 bis 9 aufweisen.

In Abhängigkeit von Molekulargewicht der Urethan-, Carboxylat- und Hydroxylgruppen enthaltenden Polyesterharze A1), dem Gehalt an Carboxyl- bzw. Carboxylatgruppen, sowie von der Art des eingesetzten Neutralisationsmittels und der gegebenenfalls mitverwendeten Hilfslösemittel liegen die Polyesterharze A1) als Lösung oder als Dispersion vor, im allgemeinen sind jedoch sowohl gelöste als auch dispergierte Anteile vorhanden.

Die Herstellung der Urethan-, Carboxylat- und Hydroxylgruppen enthaltenden Polyesterharze A1) kann durch eine an sich bekannte Umsetzung von
a) 65 bis 94, vorzugsweise 70 bis 89 Gew.-% eines Polyesterpolyols mit einer Hydroxylzahl von 50 bis 500, vorzugsweise 80 bis 350 mg KOH/g Substanz und einer Säurezahl ≤12, vorzugsweise ≤4 mg KOH/g Substanz,
b) 0 bis 35, vorzugsweise 0 bis 15 Gew.-% mindestens einer, von den Verbindungen a) und c) verschiedenen, Amino- undloder Hydroxylgruppen aufweisenden, im Sinne der Isocyanat-Additionsreaktion mono- bis tetrafunktionellen Verbindung des Molekulargewichtsbereichs von 32 bis 2000,
c) 2,0 bis 7,5, vorzugsweise 3,0 bis 6,5 Gew.-% einer 2,2-Bis(hydroxymethyl)alkancarbonsäure, oder einer dieser Säuremengen entsprechende Menge eines t-Aminsalzes einer solchen Säure und
d) 5 bis 30, vorzugsweise 7 bis 22 Gew.-% mindestens einer, mindestens difunktionellen Isocyanatkomponente des Molekulargewichtsbereichs 168 bis 1500, erfolgen,
wobei sich die zu a) bis d) gemachten Prozentangaben zu 100 % ergänzen, in 40 bis 99 %iger organischer Lösung, wobei die Komponenten a), b) und c) in einem organischen Lösemittel vorgelegt und in Gegenwart von 0 bis 2,5 Gew.-% geeigneter Katalysatoren bei Temperaturen von 40 bis 140°C mit Teil d) derart zur Reaktion gebracht werden, daß nach der Umsetzung praktisch keine freien NCO-Gruppen mehr nachweisbar sind und dann das Reaktionsgemisch in Wasser dispergiert oder gelöst wird, wobei die in das Reaktionsprodukt eingeführten Carboxylgruppen während der Umsetzung oder vor bzw. nach dem Dispergier- bzw. Löseschritt durch Zugabe einer Base zumindest teilweise, vorzugsweise zu 25 bis 100 % in die Salzform, d.h. in Carboxylatgruppen überführt werden und wobei vor, während oder nach der Herstellung der Dispersion bzw. Lösung das organische Lösemittel gegebenenfalls teilweise oder ganz destillativ aus dem Reaktionsgemisch entfernt wird. Die Mitverwendung von Lösungsmitteln stellt lediglich eine bevorzugte Variante dar. Grundsätzlich ist es auch möglich, die genannten Umsetzungen in Substanz durchzuführen.

Eine zweite Möglichkeit Urethan-, Carboxylat- und Hydroxylgruppen enthaltende Polyesterharze A1) herzustellen ist die Umsetzung von
e) 60 bis 97, vorzugsweise 70 bis 95 Gew.-% eines Polyesterpolyols mit einer Hydroxylzahl von 50 bis 500, vorzugsweise 80 bis 350 mg KOH/g Substanz und einer Säurezahl ≤12, vorzugsweise ≤4 mg KOH/g Substanz,
f) 2 bis 20, vorzugsweise 4 bis 15 Gew.-% eines Di- und/oder Tri- und/oder Tetracarbonsäureanhydrids und
g) 0,1 bis 20, vorzugsweise 0,5 bis 12 Gew.-% mindestens einer, mindestens difunktionellen Isocyanatkomponente des Molekulargewichtsbereichs von 168 bis 1500,
wobei sich die zu e), f) und g) gemachten Prozentangaben zu 100 % ergänzen, in 40 bis 99 %iger organischer Lösung, gegebenenfall auch in Substanz, d.h. 100 %ig, wobei die Komponente e) gegebenenfalls zusammen mit Lösemittel vorgelegt und bei Temperaturen von 90 bis 160°C unter Anhydridringöffnung mit Komponente f) umgesetzt wird und anschließend mit 70 bis 140°C mit Teil g) derart in Gegenwart von 0 bis 2,5 % Katalysator zur Reaktion gebracht wird, daß nach der Reaktion keine freien NCO-Gruppen mehr nachweisbar sind und dann das Reaktionsgemisch in Wasser dispergiert und/oder gelöst wird, wobei die in das Reaktionsprodukt eingeführten Carboxylgruppen während der Umsetzung oder vor bzw. nach dem Dispergier- bzw. Löseschritt durch Zugabe einer Base zumindest teilweise, vorzugsweise zu 25 bis 100 % in Carboxylatgruppen überführt werden und wobei vor, während oder nach der Herstellung der Dispersion oder Lösung das organische Lösemittel gegebenenfalls teilweise oder ganz destillativ aus dem Reaktionsgemisch entfernt wird.

Die Hydroxyl- und Carboxylgruppen enthaltenden Polyesterharze A2) sind erhätlich durch eine an sich bekannte Umsetzung von
h) 75 bis 98, vorzugsweise 85 bis 96 Gew.-% eines Polyesterpolyols mit einer Hydroxylzahl von 50 bis 500, vorzugsweise 80 bis 350 mg KOH/g Substanz und einer Säurezahl ≤12, vorzugsweise ≤4 mg KOH/g Substanz und
i) 25 bis 2, vorzugsweise 15 bis 4 Gew.-% eines Di- und/oder Tri- und/oder Tetracarbonsäureanhydrids, hergestellt werden,
wobei sich die zu h) und i) gemachten Prozentsätze zu 100 % ergänzen. Die Umsetzung erfolgt in 40 bis 99 %iger organischer Lösung, gegebenenfalls auch in Substanz, d.h. 100 %ig, wobei die Komponente h) gegebenenfalls zusammen mit Lösemittel vorgelegt und bei Temperaturen von 90 bis 160°C unter Anhydridringöffnung mit Komponente i) umgesetzt wird und dann das Reaktionsgemisch in Wasser dispergiert oder gelöst wird, wobei die in das Reaktionsprodukt eingeführten Carboxylgruppen während der Umsetzung oder vor bzw. nach dem Dispergier-bzw.

Löseschritt durch Zugabe einer base zu 25 bis 100 % in Carboxylatgruppen überführt werden und wobei vor, während oder nach der Herstellung der Dispersion bzw. Lösung das organische Lösemittel gegebenenfalls teilweise oder ganz destillativ aus dem Reaktionsgemisch entfernt wird.

Die Herstellung der Polyesterpolyole a), e) bzw. h) erfolgt z.B. durch eine an sich bekannte Polykondensation von
a1) 0 bis 60 Gew.-% an Monocarbonsäuren des Molekulargewichtsbereichs 112 bis 340,
a2) 10 bis 65 Gew.-% Polycarbonsäuren des Molekulargewichtsbereichs 98 bis 600 oder Anhydriden derartiger Polycarbonsäuren,
a3) 5 bis 70 Gew.-% an di- und höherfunktionellen Alkoholen des Molekulargewichtsbereichs 62 bis 2000,
a4) 0 bis 30 Gew.-% einwertigen Alkoholen des Molekulargewichtsbereichs 100 bis 299,
a5) 0 bis 15 Gew.-% an Hydroxycarbonsäuren des Molekulargewichtsbereichs 90 bis 280 oder an Lactonen derartiger Hydroxycarbonsäuren,
a6) 0 bis 15 Gew.-% an Aminoalkoholen des Molekulargewichtsbereichs 61 bis 300 und/oder an Aminocarbonsäuren des Molekulargewichtsbereichs 75 bis 260,
wobei die sich zu a1) bis a6) gemachten Prozentangaben zu 100 ergänzen, und wobei die Umsetzung gegebenenfalls unter Zuhilfenahme von üblichen Veresterungskatalysatoren vorzugsweise nach dem Prinzip einer Schmelz- oder Azeotropkondensation bei Temperaturen von 140 bis 240°C unter Wasserabspaltung erfolgt.

Geeignete Monocarbonsäuren a1) sind beispielsweise Benzoesäure, tert.-Butylbenzoesäure, Hexahydrobenzoesäure, gesättigte Fettsäuren wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure, ungesättigte Fettsäuren, wie z.B. Sojaölfettsäure, Sorbinsäure, Erdnußölfettsäure, Konjuenfettsäuren, Tallölfettsäure, Safflorölfettsäure sowie Gemische dieser oder anderer Monocarbonsäuren.

Geeignete höherfunktionelle Carbonsäuren a2) bzw. Anhydride sind beispielsweise Phthalsäure(anhydrid), Isophthalsäure, Terephthalsäure, Tetrahydrophthalsäure(anhydrid), Hexahydrophthalsäure(anhydrid), Maleinsäure(anhydrid), Bernsteinsäure(anhydrid), ), Fumarsäure, Adipinsäure, Sebacinsäure, Azelainsäure, Dimerfettsäuren, Trimerfettsäuren, Trimellithsäure(anhydrid), Pyromellithsäure(anhydrid) und Gemische dieser oder anderer Säuren.

Geeignete mehrwertige Alkohole a3) sind beispielsweise Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butandiol, Trimethylpropan, Glycerin, Pentaerythrit, Trimethylpentandiol, Dipentaerythrit und Gemische dieser oder anderer mehrwertiger Alkohole.

Geeignete einwertige Alkohole a4) sind beispielsweise n-Hexanol, Cyclohexanol, Decanol, Dodecanol, Tetradecanol, Octanol, Octadecanol, natürliche Fettalkoholgemische wie z.B. Ocenol 110/130 (Fa. Henkel) und Gemische dieser und anderer Alkohole.

Geeignete Ausgangskomponenten a5) sind beispielsweise Dimethylolpropionsäure, Milchsäure, Äpfelsäure, Weinsäure, ε-Hydroxycapronsäure, Rizinusölfettsäure oder ε-Caprolacton.

Geeignete Ausgangskomponenten a6) sind beispielsweise Aminoethanol, 2-Aminopropanol, Diethanolamin, Aminoessigsäure oder 6-Aminohexansäure.

Bevorzugte Polyesterpolyole a), e) oder h) enthalten
a1) 0 bis 55 Gew.-% Monocarbonsäuren mit 7 bis 20 Kohlenstoffatomen, wie Benzoesäure, 2-Ethylhexansäure, Isonansäure, hydrierte technische Fettsäuren bzw. deren Gemische (wie z.B. Prifrac® 2950, Prifrac® 2960, Prifrac® 2980 von Unichema International), Stearinsäure, Palmitinsäure, Erdnußölfettsäure und/oder Sojaölfettsäure,
a2) 15 bis 56 Gew.-% Di- und/oder Tricarbonsäuren bzw. deren Anhydride wie beispielsweise Phthalsäureanhydrid, Hexahydrophthalsäureanhydrid, Isophthalsäure, Maleinsäureanhydrid, Terephthalsäure, Fumarsäure, Adipinsäure, Benzoltricarbonsäure und/oder Dimerfettsäure, sowie
a3) 25 bis 65 Gew.-% di- und/oder höherfunktionelle Alkohole wie z.B. Ethylenglykol, 1,2-Propylenglykol, 1,6-Hexandiol, 1,4-Cyclohexandimethanol, Neopentylglykol, Trimethylolpropan, Glycerin und/oder Pentaerythrit,
wobei sich die genannten Prozentangaben zu 100 ergänzen.

Bei der Ausgangskomponente b) handelt es sich um mindestens eine, von den Verbindungen a) und c) verschiedene, im Sinne der Isocyanat-Additionsreaktion mono- bis tetrafunktionelle, Amino- und/oder Hydroxylgruppen aufweisende Verbindung des Molekulargewichtsbereichs 32 bis 2000. Geeignet sind beispielsweise Monoalkohole wie z.B. Methanol, n-Butanol, n-Butylglykol, n-Hexanol, Stearylalkohol, die isomeren Octadecenole oder Octadecadienole, Benzylalkohol; zweiwertige Alkohole wie z.B. Neopentylglykol, 1,6-Hexandiol, 1,4-Bis-hydroxymethyl-cyclohexan; dreiwertige Alkohole wie z.B. Glycerin oder Trimethylolpropan; vierwertige Alkohole wie beispielsweise Pentaerythrit, sowie die Alkoxylierungsprodukte derartiger Alkohole; ferner Aminoalkohole wie Ethanol, Diethanolamin, Aminomethylpropanol oder Amine wie z.B. N-Methylcyclohexylamin, Stearylamin, Diethylentriamin, 1,6- Diaminohexan oder Isophorondiamin.

Bei der Komponente c) handelt es sich um mindestens eine 2,2-Bis-(hydroxymethyl)-alkancarbonsäure mit insgesamt mindestens 5 Kohlenstoffatomen, vorzugsweise um 2,2-Bis(hydroxymethyl)-propionsäure (Dimethylolpropionsäure) oder um ein t-Aminsalz einer solchen Säure, beispielsweise um das Triethylamin-Salz der Dimethylolpropionsäure.

Bei der Komponente d) bzw. g) handelt es sich um mindestens eine, mindestens difunktionelle Isocyanatkomponente des Molekulargewichtsbereiches 168 bis 1500. Geeignet sind beispielsweise Hexamethylendiisocyanat, Perhydro-2,4- und -4,4'-diphenylmethandiisocyanat, Isophorondiisocyanat, Toluylendiisocyanat, Naphthalindiisocyanat und andere Isocyanate wie sie z.B. in "Methoden der organischen Chemie" (Houben-Weyl, Bd. 14/2, 4. Auflage, Georg Thieme Verlag Stuttgart 1963, S. 61 bis 70) beschrieben werden.

Ebenfalls geeignet sind z.B. Lackpolyisocyanate auf Hexamethylendiisocyanat-, Isophorondiisocyanat- und Toluylendiisocyanatbasis, die z.B. Urethangruppen, Uretdiongruppen, Isocyanurat- und, oder Biuretgruppen aufweisen. Vorzugsweise eingesetzt werden Hexamethylendiisocyanat, Isophorondiisocyanat und Lackpolyisocyanate auf Hexamethylendiisocyanatbasis wie sie z.B. bei der Beschreibung der Komponente B) erläutert sind. Ebenfalls geeignet sind Gemische der genannten und auch der anderen Polyisocyanate.

Bei den Ausgangskomponenten f) bzw. i) handelt es sich um mindestens ein Anhydrid einer Di-, Tri- und, oder Tetracarbonsäure, wie z.B. Tetrahydrophthalsäureanhydrid, Maleinsäureanhydrid, Phthalsäureanhydrid, Trimellithsäureanhydrid und/oder Pyromellithoäureanhydrid.

Die Hydroxyl- und Sulfonatgruppen enthaltenden Polyesterharze A3) werden durch eine an sich bekannte Polykondensation der obengenannten Ausgangsmaterialien a1) bis a6) in den angegebenen Mengenverhältnissen zusammen mit
a7) 0,5 bis 25, vorzugsweise 2 bis 12 Gew.-% einer Sulfonatgruppen aufweisenden Aufbaukomponente, ausgewählt aus der Gruppe bestehend aus Sulfonatgruppen aufweisenden Alkoholen und Sulfonatgruppen aufweisenden aromatischen Carbonsäuren
hergestellt, wobei sich die gemachten Prozentangaben zu 100 ergänzen, und wobei die Umsetzung gegebenenfalls unter Zuhilfenahme von üblichen Veresterungskatalysatoren vorzugsweise nach dem Prinzip einer Schmelz- oder Azeotropkondensation bei Temperaturen von 140 bis 240°C unter Wasserabspaltung erfolgt. Gegebenenfalls kann anschließend eine Modifizierungsreaktion zur Einführung von Urethangruppen durch Umsetzung mit mindestens difunktionellen Isocyanaten der unter d) bzw. g) beschriebenen Art erfolgen.

Geeignete Ausgangskomponenten a7) sind beispielsweise Lithium-, Kalium-, Natrium-, Magnesium-, Calcium- oder t-Aminsalze der 5-Sulfoisophthalsäure, der Sulfobenzoesäure, der Sulfophthalsäure, der Dimethylsulfoisophthalsäure, der 3-Hydroxy-5-sulfobenzoesäure und der 2- Hydroxy-5-sulfobenzoesäure, Auch Sulfonatdiole der beispielsweise in DE-OS 2 446 440 offenbarten Art sind als Ausgangskomponente a7) geeignet. Vorzugsweise werden als Ausgangskomponente a7) die durch Neutralisation der Sulfonsäuregruppe von aromatischen Sulfocarbonsäuren des Molekulargewichtsbereichs 224 bis 360 mit Lithium-, Kalium- oder Natriumhydroxid bzw. -carbonat oder -bicarbonat oder mit t-Aminen erhältlichen Carboxylgruppen aufweisenden Sulfonate verwendet. Als tertiäre Amine zur Neutralisation der Sulfonsäuregruppen kommen beispielsweise Triethylamin, N,N-Dimethyl-ethanolamin, N-Methyldiethanolamin oder andere tertiäre Amine in Betracht. Grundsätzlich möglich, jedoch weniger bevorzugt ist auch die Verwendung von entsprechenden freien Carboxyl- und Sulfonsäuregruppen aufweisenden Säuren bei der Durchführung der Polykondensationsreaktion unter anschließender, zumindest teilweiser Neutralisation der auf diese Weise in die Polyesterharze eingebauten Sulfonsäuregruppen.

Geeignete organische Lösemittel zur Herstellung der Polyesterharze A1) bis A3) sind z.B. N-Methylpyrrolidon, Diethylenglykoldimethylether, Methylethylketon, Methylisobutylketon, Aceton, Xylol, Toluol, Butylacetat bzw. Gemische dieser oder anderer Lösemittel. Die verwendeten organischen Lösemittel können vor, während oder nach dem Dispergierschritt ganz oder teilweise, gegebenenfalls azeotrop und/oder durch Anlegen eines Vakuums bzw. eines verstärkten Inertgasstromes aus dem Reaktionsgemisch entfernt werden.

Geeignete Katalysatoren für eine Urethanisierungsreaktion können z.B. sein: tertiäre Amine wie z.B. Triethylamin, Zinn-II-octoat, Dibutylzinnoxid, Dibutylzinndilaurat und andere gebräuchliche Katalysatoren.

Geeignete Katalysatoren für eine Veresterungsreaktion können z.B. sein: Dibutylzinnoxid, Schwefelsäure, para-Toluolsulfonsäure,

Falls bei der Herstellung der Polyesterharze nicht bereits in der Salzform vorliegende Aufbaukomponenten in einer zur Herstellung der Wasserdispergierbarkeit ausreichenden Menge mitverwendet worden sind, werden die eingebauten Säuregruppen zumindest teilweise, vorzugsweise zu 25 bis 100, besonders bevorzugt zu 40 bis 100 % in die Salzform überführt. Für diese Neutralisation geeignete Basen sind beispielsweise Ammoniak, N-Methylmorpholin, Triethylamin, Dimethylethanolamin, Natriumhydroxid, Lithiumhydroxid und Kaliumhydroxid. Die Neutralisationsmittel können auch im stöchiometrischen Überschuß eingesetzt werden.

Nach der Herstellung können zur Erzielung bestimmter Eigenschaften auch geringe Mengen anderer organischer Lösemittel bzw. Reaktivverdünner wie z.B. Ethanol, Propanol, Ethylenglykol, Propylenglykol, Butanol, Butylglykol, Hexanol, Octanol, Butyldiglykol, Glycerin, Ethyldiglykol, Methyldiglykol und Methoxypropanol zugesetzt werden.

Zur Dispergierung der Polyesterharze A1) bis A3) kann alternativ das Wasser/Neutralisationsmittelgemisch zum Harz, Wasser zum Harz-/Neutralisationsmittelgemisch, das Harz zum Wasser/Neutralisationsmittelgemisch oder das Harz-/Neutralisationsmittelgemisch zum Wasser gegeben werden. Die Dispergierbarkeit der Harze in Wasser kann gewünschtenfalls durch Mitverwendung von externen Emulgatoren wie z.B. ethoxyliertes Nonylphenol beim Dispergieren verbessert werden.

Der Dispergierschritt wird üblicherweise bei 40 bis 120°C durchgeführt. Die wäßrigen Lösungen oder Dispersionen der Polyesterharze A1) bis A3), die zur Herstellung der erfindungsgemäßen Polyolkomponente A) eingesetzt werden können, weisen im allgemeinen einen Festkörpergehalt von 20 bis 65, vorzugsweise 30 bis 55 Gew.-% auf. Ihr Gehalt an (gegenüber Isocyanatgruppen inerten) Lösungsmitteln und (gegenüber Isocyanatgruppen reaktionsfähigen) Reaktivverdünnern liegt im allgemeiner insgesamt bei maximal 8, vorzugsweise maximal 6 und besonders bevorzugt maximal 1,5 Gew.-%.

Bei der Polyolkomponente A4) handelt es sich um Hydroxylgruppen, Sulfonat- und/oder Carboxylatgruppen, vorzugsweise Carboxylatgruppen und gegebenenfalls Sulfonsäure und/oder Carboxylgruppen, vorzugsweise Carboxylgruppen aufweisende Polymerisate von olefinisch ungesättigten Monomeren, die vorzugsweise ein nach der Gelpermeationschromatographie unter Verwendung von Polystyrol als Standard bestimmbares Molekulargewicht Mw (Gewichtsmittel) von 500 bis 100 000, insbesondere 1000 bis 50 000, eine Hydroxylzahl von 16,5 bis 264, vorzugsweise 33 bis 165 mg KOH/g Festharz und eine Säurezahl (bezogen auf alle Carboxyl- und Sulfonsäuregruppen, die zu 25 bis 100 % in der Salzform vorliegen), von 5 bis 125 mg KOH/g Feststoff aufweisen. Besonders bevorzugt handelt es sich bei diesen anionischen Gruppen um Carboxylatgruppen.

Die Polymerisatharze A4) kommen bei der Herstellung der erfindungsgemäßen Beschichtungsmittel im allgemeinen in Form von 10- bis 50-, vorzugsweise 20 bis 40 gew.-%igen, wäßrigen Lösungen und/oder Dispersionen zum Einsatz, die im allgemeinen eine Viskosität von 10 bis 10⁵, vorzugsweise 100 bis 10 000 mPa.s/23°C und pH-Werte von 5 bis 10, vorzugsweise 6 bis 9 aufweisen.

In Abhängigkeit vom Molekulargewicht der Polymerisate und ihrem Gehalt an anionischen Gruppen bzw. an freien Säuregruppen, insbesondere Carboxylgruppen handelt es sich auch bei den wäßrigen, die Polymerisate enthaltenden Systemen um echte Dispersionen, kolloiddisperse oder molekulardisperse Dispersionen, im allgemeinen jedoch um sogenannte "Teildispersionen", d.h, um wäßrige Systeme, die zum Teil molekulardispers und zum anderen Teil kolloiddispers sind.

Die Herstellung der Hydroxylgruppen aufweisenden Polymerisate erfolgt auch durch an sich bekannte Copolymerisation von olefinisch ungesättigten Monomeren, wobei als Monomere sowohl Hydroxylgruppen aufweisende Monomere n) als auch Säuregruppen, d.h. Sulfonsäuregruppen oder Carboxylgruppen, vorzugsweise Carboxylgruppen aufweisende Monomere m), im allgemeinen zusammen mit weiteren Monomeren o) copolymerisiert werden, wonach die vorliegenden Säuregruppen zumindest teilweise neutralisiert werden.

Die Mitverwendung der Säuregruppen aufweisenden Monomeren erfolgt zwecks Einbaus von Carboxyl- und/oder Sulfonsäuregruppen in die Copolymerisate, die aufgrund ihrer Hydrophilie die Wasserlöslichkeit bzw. -dispergierbarkeit der Polymerisate, insbesondere nach erfolgter zumindest partieller Neutralisation der Säuregruppen gewährleisten. Die Menge der mitverwendeten "sauren" Comonomere und der Neutralisationsgrad der zunächst erhaltenen "sauren" Polymerisate entspricht den obengenannten Angaben bezüglich Säurezahl und des Gehalts an Sulfonatund/oder Carboxylatgruppen. Im allgemeinen kommen die "sauren" Comonomeren in Mengen von 0,3 bis 30, vorzugsweise 1 bis 20 Gew.-%, bezogen auf das Gesamtgewicht der eingesetzten Monomeren zum Einsatz. Bei Verwendung von weniger als 5 Gew.-% an "sauren" Monomeren resultieren im allgemeinen auch nach vollständiger Neutralisation wäßrige Dispersionen, in denen allenfalls ein geringer Polymeranteil molekulardispers gelöst enthalten ist. Geht man zu höheren Gehalten an "sauren" Monomeren bei konstanten Neutralisationsgrad über, resultieren steigende Anteile an molekulardispers gelöster Spezies, bis schließlich bei Gehalten von über ca. 12 Gew.-% die kolloiddispersen Anteile verschwinden.

Geeignete "saure" Comonomere m) sind im Prinzip alle olefinisch ungesättigten, polymerisierbaren Verbindungen, die mindestens eine Carboxyl- und/oder Sulfonsäuregruppe aufweisen wie beispielsweise olefinisch ungesättigte Mono- oder Dicarbonsäuren des Molekulargewichtsbereichs 72 bis 207 wie Acrylsäure, Methacrylsäure, Maleinsäure, Itaconsäure oder Sulfonsäuregruppen aufweisende olefinisch ungesättigte Verbindungen wie beispielsweise 2-Acrylamido-2-methylpropansulfonsäure oder beliebige Gemische derartiger olefinisch ungesättigter Säuren.

Die Hydroxylgruppen aufweisenden Monomeren n) werden in solchen Mengen mitverwendet, daß die obengenannten Hydroxylzahlen von 0,5 bis 8, vorzugsweise 1 bis 5 Gew.-% entsprechen. Im allgemeinen werden die hydroxyfunktionellen Comonomeren in Mengen von 3 bis 75, vorzugsweise 6 bis 47 Gew.-%, bezogen auf das Gesamtgewicht der eingesetzten Monomeren mitverwendet. Außerdem muß selbstverständlich darauf geachtet werden, daß im Rahmen der gemachten Angaben die Mengen der hydroxyfunktionellen Monomeren so gewählt wird, daß Copolymerisate entstehen, die im statistischen Mittel pro Molekül mindestens zwei Hydroxylgruppen aufweisen.

Geeignete Hydroxylgruppen aufweisende Monomere n) sind insbesondere Hydroxyalkylester der Acrylsäure oder Methacrylsäure mit vorzugsweise 2 bis 4 Kohlenstoffatomen im Alkylrest wie z.B. 2-Hydroxyethylacrylat oder -methacrylat, die isomeren Hydroxypropyl(meth)acrylate, die durch Anlagerung von Propylenoxid an (Meth)acrylsäure entstehen, sowie die isomeren Hydroxybutylacrylate oder -methacrylate oder beliebige Gemische derartiger Monomerer.

Als dritte Gruppe von olefinisch ungesättigten Monomeren o), die bei der Herstellung der Copolymerisate im allgemeinen mitverwendet werden, sind solche olefinisch ungesättigten Verbindungen zu nennen, die weder saure Gruppen noch Hydroxylgruppen aufweisen. Hierzu gehören beispielsweise Ester der Acrylsäure bzw. der Methacrylsäure mit 1 bis 18, vorzugsweise 1 bis 8 Kohlenstoffatomen im Alkoholrest wie z.B. Methylacrylat, Ethylacrylat, Isopropylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomerer. Auch Epoxidgruppen aufweisende Comonomere wie z.B. Glycidylacrylat oder -methacrylat oder Monomere wie N-Methoxymethacrylamid oder -methacrylamid können in geringen Mengen mitverwendet werden.

Die Monomeren der letztgenannten dritten Gruppe ohne Säure- und Hydroxylgruppen werden im allgemeinen in Mengen von 5 bis 90 Gew.-%, vorzugsweise 40 bis 80 Gew.-%, bezogen auf das Gesamtgewicht der eingesetzten Monomeren mitverwendet.

Die Herstellung der Polymerisate A4) kann durch Polymerisation nach üblichen Verfahren durchgeführt werden. Möglich sind z.B. Masse-, Lösungs-, Emulsions- und Suspensionspolymerisationsverfahren. Vorzugsweise erfolgt die Herstellung der olefinischen Polymerisate in organischer Lösung oder in wäßriger Emulsion. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist.

Bei der Lösungspolymerisation in Zulauffahrweise wird das Lösungsmittel allein oder mit einem Teil des Monomergemischs vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen.

Um besondere Effekte zu erzielen, ist es auch möglich, einen Teil der Monomeren langsamer, schneller, früher beginnend, später beginnend, früher endend und/oder später endend zuzudosieren.

Als Lösungsmittel kommen beispielsweise Aromaten, wie Benzol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Diethylenglykoldimethylether, Ketone wie Aceton, Methylethylketon, halogenhaltige Lösemittel wie Methylenchlorid oder Trichlormonofluorethan in Betracht.

Die durch Radikale initiierte Polymerisation kann durch Initiatoren ausgelöst werden, deren Halbwertzeiten des Radikalzerfalls bei 80 bis 180°C zwischen 0,01 und 400 min, liegen. Im allgemeinen erfolgt die Copolymerisationsreaktion im genannten Temperaturbereich, vorzugsweise zwischen 100 und 160°C, unter einem Druck von 10³ bis 2 x 10⁴ mbar, wobei sich die genaue Polymerisationstemperatur nach der Art des Initiators richtet. Die Initiatoren werden in Mengen von 0,05 bis 6 Gew.-%, bezogen auf die Gesamtmenge an Monomeren, eingesetzt.

Geeignete Initiatoren sind z.B. aliphatische Azoverbindungen wie Azoisobutyronitril sowie Peroxide wie z.B. Dibenzoylperoxid, t-Butylperpivalat, t-Butylper-2-ethylhexanoat, t-Butylperbenzoat, t-Butylhydroperoxid, Di-t- butylperoxid, Cumolhydroperoxid sowie Dicyclohexyl- und Dibenzylperoxydicarbonat.

Zur Regelung des Molekulargewichts der Polymeren A4) können übliche Regler eingesetzt werden wie z.B. n-Dodecylmercaptan, Diisopropylxanthogendisulfid, Di(methylentrimethylolpropan)xanthogendisulfid und Thioglykol. Sie werden in Mengen von höchstens 3 Gew.-%, bezogen auf das Monomerengemisch, zugegeben.

Nach beendeter Polymerisation werden die Copolymerisate A4) in eine wäßrige Lösung bzw. Dispersion überführt. Hierzu wird die organische Polymerlösung in eine meist vorgewärmte Wasserphase eingeleitet. Hierbei kann das organische Lösungsmittel destillativ entfernt werden bzw. in untergeordneten Mengen in der wäßrigen Phase verbleiben.

Um eine gute Wasserlöslichkeit bzw. -dispergierbarkeit zu erreichen, muß der Wasserphase im allgemeinen ein Neutralisationsmittel, wie z.B. anorganische Basen, Ammoniak oder Amine, zugesetzt werden. Als anorganische Basen können beispielsweise Natriumhydroxid, Kaliumhydroxid, als Amine neben Ammoniak Trimethylamin, Triethylamin und Dimethylethanolamin eingesetzt werden. Die Neutralisationsmittel können sowohl im stöchiometrischen Unter- als auch Überschuß eingesetzt werden, wobei die obengenannten Gehalte an Sulfonat- und/oder Carboxylgruppen, insbesondere an Carboxylatgruppen und die obengenannten Säurezahl resultieren. Im Falle einer völligen Neutralisation der vorliegenden sauren Gruppen resultiert dann die Säurezahl Null, während der Gehalt an Sulfonat- und/oder Carboxylatgruppen dem ursprünglichen Gehalt an Sulfonsäuregruppen bzw. Carboxylgruppen entspricht. Bei einer Teilneutralisation entsprechen die Gehalt an Sulfonat- und/oder Carboxylatgruppen der Menge des eingesetzten Neutralisationsmittels. Insbesondere bei Verwendung eines stöchiometrischen Überschusses an Neutralisationsmittel ist jedoch darauf zu achten, daß durch den Polyelektrolytcharakter der Polymeren eine deutliche Viskositätszunahme erfolgen kann. Die erhaltenen wäßrigen Lösungen bzw. Dispersionen besitzen die obengenannten Konzentrationen und Viskositäten und weisen im allgemeinen einen Gehalt an Restlösungsmittel von unter 10 Gew.-%, vorzugsweise von unter 5 Gew.-% auf. Die praktisch restlose Entfernung auch von höher als Wasser siedenden Lösungsmitteln ist durch azeotrope Destillation möglich.

Ein ebenfalls bevorzugtes Verfahren zur Herstellung der Polymerpolyole A4) ist das Verfahren der Emulsionspolymerisation direkt in wäßrigem Milieu, wobei als Monomere wiederum sowohl Hydroxylgruppen aufweisende Substanzen als auch Säuregruppen, d.h. Sulfonsäure- oder Carboxylgruppen, vorzugsweise Carboxylgruppen aufweisende Monomere, im allgemeinen zusammen mit weiteren Monomeren copolymerisiert werden, wonach die vorliegenden Säuregruppen zumindest teilweise neutralisiert werden. Die Herstellung der Polymerisate erfolgt durch das an sich bekannte Verfahren der radikalischen Emulsionspolymerisation im wäßrigen Milieu. Möglich sind wiederum kontinuierliche oder diskontinuierliche Polymerisationsverfahren.

Von den diskontinuierlichen Verfahren sind das Batchund das Zulaufverfahren zu nennen, wobei letzteres wieder bevorzugt ist. Bei dem Zulaufverfahren wird Wasser allein oder mit einem Teil des anionischen Emulgators, gegebenenfalls unter Beimischung eines nichtionischen Emulgators, sowie mit einem Teil der Monomermischung vorgelegt, auf die Polymerisationstemperatur erwärmt, die Polymerisation im Fall einer Monomervorlage radikalisch gestartet und das restliche Monomergemisch zusammen mit einem Initiatorgemisch und dem Emulgator im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen.

Die hierbei eingesetzten Emulgatoren sind anionischer und/oder nichtionischer Natur. Von den Emulgatoren mit anionischer Natur sind solche mit Carboxylatgruppen, Sulfat-, Sulfonat-, Phosphat- oder Phosphonatgruppen einsetzbar. Bevorzugt sind Emulgatoren mit Sulfat-, Sulfonat-, Phosphat- oder Phosphonatgruppen. Die Emulgatoren können niedermolekular oder hochmolekular sein. Letztere werden z.B. in der DE-OS 38 06 066 und der DE-AS 19 53 941 beschrieben. Bevorzugt sind solche anionischen Emulgatoren, die mit Ammoniak oder Aminen neutralisiert worden sind. Besonders bevorzugt sind Emulgatoren, die aus langkettigen Alkoholen oder substituierten Phenolen sowie Ethylenoxidketten mit Polymerisationsgraden zwischen 2 und 100 und abschließender Monoschwefelsäureestergruppe bzw. Phosphorsäuremono- und -diestergruppen aufgebaut sind. Als Neutralisationsmittel dient hierbei im allgemeinen Ammoniak. Sie können dem Emulsionsansatz einzeln oder in beliebigen Mischungen zugesetzt werden.

Als nichtionogene Emulgatoren, die meist in Kombination mit den obengenannten anionischen Emulgatoren eingesetzt werden können, eignen sich Umsetzungsprodukte von aliphatischen, araliphatischen, cycloaliphatischen oder aromatischen Carbonsäuren, Alkoholen, Phenolderivaten bzw. Aminen mit Epoxiden wie z.B. Ethylenoxid. Beispiele dafür sind Umsetzungsprodukte von Ethylenoxid mit Carbonsäuren wie z.B. Laurinsäure, Stearinsäure, Ölsäure, den Carbonsäuren des Ricinusöls, Abietinsäure, mit längerkettigen Alkoholen wie Oleylalkohol, Laurylalkohol, Stearylalkohol, mit Phenolderivaten wie z.B. substituierten Benzyl-, Phenylphenolen, Nonylphenol und mit längerkettigen Aminen wie z.B. Dodecylamin und Stearylamin. Bei den Umsetzungsprodukten mit Ethylenoxid handelt es sich um Oligo- bzw. Polyether mit Polymerisationsgraden zwischen 2 und 100, vorzugsweise von 5 bis 50.

Diese Emulgatoren werden in Mengen von 0,1 bis 10 Gew.-%, bezogen auf die Mischung der Monomeren zugegeben. Als eventuelle Colösemittel kommen sowohl wasserlösliche als auch wasserunlösliche Lösungsmittel in Betracht. Geeignet sind beispielsweise Aromaten wie Benzol, Toluol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Ether des Diglykols, Ketone wie Aceton, Methylethylketon, Methylisobutylketon, Trichlormonofluorethan, cyclische Amide wie N-Methylpyrrolidon oder N-Methylcaprolactam.

Die durch Radikale initiierte Polymerisation kann durch wasserlösliche und wasserunlösliche Initiatoren bzw. Initiatorsysteme ausgelöst werden, deren Halbwertzeiten des Radikalzerfalls bei Temperaturen von 10°C bis 100°C zwischen 0,01 und 400 min. liegen. Im allgemeinen erfolgt die Polymerisation in wäßriger Emulsion im genannten Temperaturbereich, vorzugsweise zwischen 30 und 90°C, unter einem Druck von 10³ bis 2 x 10⁴ mbar, wobei sich die genaue Polymerisationstemperatur nach der Art des Initiators richtet. Die Initiatoren werden in Mengen von 0,05 bis 6 Gew.-%, bezogen auf die Gesamtmenge an Monomeren eingesetzt.

Geeignete Initiatoren sind z.B. wasserlösliche und -unlösliche Azoverbindungen wie Azoisobuttersäuredinitril oder 4,4'-Azo-bis-(4-cyanpentansäure) sowie anorganische und organische Peroxide wie z.B. Dibenzoylperoxid, t- Butylperpivalat, t-Butylper-2-ethylhexanoat, t-Butylperbenzoat, t-Butylhydroperoxid, Di-t-butylperoxid, Cumolhydroperoxid, Dicyclohexyl- und Dibenzylperoxydicarbonat sowie Natrium-, Kalium- oder Ammoniumsalze der Peroxydischwefelsäure und Wasserstoffperoxid. Die Peroxydisulfate und Wasserstoffperoxide werden oft in Kombination mit Reduktionsmitteln wie z.B. dem Natriumsalz der Formamidinsulfinsäure (Rongalit C), Ascorbinsäure oder Polyalkylenpolyamin eingesetzt. Hiermit wird im allgemeinen eine deutliche Erniedrigung der Polymerisationstemperatur erzielt.

Zur Regelung des Molekulargewichts der Polymeren können wieder übliche Regler eingesetzt werden wie z.B. n-Dodecylmercaptan, t-Dodecylmercaptan, Diisopropylxanthogendisulfid, Di(methylentrimethylolpropan)xanthogendisulfid und Thioglykol. Sie werden in Mengen von höchstens 3 Gew.-%, bezogen auf das Monomergemisch, zugegeben.

Nach beendeter Polymerisation werden die in wäßriger Dispersion vorliegenden Polymerisate gegebenenfalls mit Neutralisationsmittel bis zu Neutralisationsgraden von 25 bis 100 %, vorzugsweise 35 bis 100 %, versetzt. Hierzu werden als Neutralisationsmittel anorganische Basen, Ammoniak oder Amine zugesetzt. Als anorganische Basen können z.B. Natriumhydroxid, Kaliumhydroxid, als Amine neben Ammoniak Trimethylamin, Triethylamin, Dimethylethanolamin, Methyldiethanolamin, Triethanolamin etc. eingesetzt werden. Die Neutralisationsmittel können sowohl im stöchiometrischen Unter- als auch Überschuß eingesetzt werden, wobei die obengenannten Gehalte an Sulfonat- und/oder Carboxylatgruppen, insbesondere an Carboxylatgruppen und die obengenannten Säurezahlen resultieren.

Im Falle einer völligen Neutralisation der vorliegenden sauren Gruppen resultiert dann wieder die Säurezahl Null, während der Gehalt an Sulfonat- und/oder Carboxylatgruppen dem ursprünglichen Gehalt an Sulfonsäuregruppen bzw. Carboxylgruppen entspricht. Bei einer Teilneutralisation entsprechen die Gehalt an Sulfonatund/oder Carboxylatgruppen der Menge des eingesetzten Neutralisationsmittels. Insbesondere bei Verwendung eines stöchiometrischen Überschusses an Neutralisationsmittel ist jedoch darauf zu achten, daß durch den Polyelektrolytcharakter der Polymeren eine deutliche Viskositätszunahme erfolgen kann. Die erhaltenen wäßrigen Lösungen bzw. Dispersionen besitzen die obengenannten Konzentrationen und Viskositäten.

Eventuell zugesetzte Colösemittel können in der wäßrigen Dispersion in Mengen bis zu ca. 20 Gew.-%, bezogen auf die wäßrige Phase, verbleiben. Die Colösemittel können aber auch nach Bedarf im Anschluß an die Polymerisation destillativ entfernt werden.

Bei der Komponente A5) handelt es sich um acrylatgepfropfte Polyesterharze, welche Hydroxy- und Carboxylat- bzw. Sulfonatgruppen enthalten. Diese Polymere besitzen ein Molekulargewicht Mw von 3000 bis 100 000, eine Hydroxylzahl von 20 bis 300 mg K0H/g Substanz und eine Säurezahl, bezogen auf alle Carboxyl- bzw. Sulfonsäuregruppen, die dabei zu 25 bis 100, vorzugsweise zu 100 % in Salzform vorliegen, von 5 bis 75.

Die Herstellung erfolgt durch Polymerisation einer säuregruppenhaltigen Monomermischung p) in einem Polyesterharz q). Dabei werden 95 bis 10 % der Monomermischung p), die aus Monomeren der bereits oben untr m) und n) genannten Art und gegebenenfalls solchen der oben unter o) genannten Art besteht, in Gegenwart von 5 bis 90, vorzugsweise 10 bis 50 Gew.-% eines Polyesterpolyols q) mit einer Hydroxylzahl von 10 bis 500, vorzugsweise 75 bis 300 und einer Säurezahl <30 und einem Gehalt an Doppelbindungen (berechnet als C=C, Molekulargewicht = 24) von 0 bis 10 % polymerisiert.

Die Polyester können als Bausteine die oben unter a1) bis a6) und gegebenenfalls unter a7) genannten Bausteine enthalten.

Die Pfropfpolymerisation wird dabei üblicherweise in 50 bis 90 %iger Lösung, vorzugsweise lösemittelfrei bei 90 bis 180°C unter Mitverwendung geeigneter Initiatoren, wie z.B. solchen der obengenannten Art und gegebenenfalls unter Mitverwendung geeigneter molekulargewichtsregelnder Substanzen, z.B. solchen der obengenannten Art durchgeführt, wobei Polyester und gegebenenfalls Lösemittel vorgelegt und Monomermischung und Initiator zudosiert werden.

Im Anschluß an die Pfropfcopolymerisation wird das Polymer A5) dann in Wasser dispergiert, wobei gegebenenfalls noch die oben beschriebenen Neutralisationsmittel zugesetzt werden, falls dies nicht bereits geschehen ist.

Bei der Herstellung der Polyolkomponenten A1) bis A5) können, wie dargelegt, Hilfslösungsmittel mitverwendet werden. Ihre Menge wird jedoch vorzugsweise so begrenzt, bzw. nach erfolgter Herstellung der Einzelkomponenten A1) bis A5) soweit reduziert, daß in der durch Abmischung der Einzelkomponenten resultierenden wäßrigen Polyolkomponente A) gegenüber Isocyanatgruppen inerte Lösungsmittel der beispielhaft genannten Art in einer Menge von maximal 8 Gew.-%, vorzugsweise maximal 5 Gew.- % und besonders bevorzugt maximal 1,5 Gew.-% vorliegen. Die beispielhaft genannten (gegenüber Isocyanatgruppen reaktionsfähigen) Reaktivverdünner, die den Einzelkomponenten oder gewünschtenfalls auch der Mischung A) der Einzelkomponenten zugemischt werden können, liegen in den wäßrigen Lösungen oder Dispersionen A) ebenfalls maximal in einer Menge von 8 Gew.-%, vorzugsweise maximal 5 Gew.-% vor. Besonders bevorzugt wird auf die Mitverwendung derartiger Reaktivverdünner völlig verzichtet.

Zur Herstellung der wäßrigen Lösungen oder Dispersionen A) werden die wäßrigen Lösungen bzw. Dispersionen der beispielhaft genannten Einzelkomponenten A1) bis A5) in beliebigen Gewichtsverhältnissen miteinander gemischt, wobei lediglich darauf zu achten ist, daß im Gemisch mindestens zwei Einzelkomponenten aus unterschiedlichen Gruppen A1) bis A5) in einer Menge von jeweils mindestens 5, vorzugsweise mindestens 15 Gew.-% vorliegen. Der bevorzugte Gehalt der wäßrigen Lösungen oder Dispersionen A) an gelösten und/oder dispergierten Polyhydroxylverbindungen A1) bis A5) liegt im allgemeinen bei 25 bis 50 Gew.-%.

Bei der Polyisocyanatkomponente B) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente B) weist bei 23°C im allgemeinen eine Viskosität von 50 bis 10 000, vorzugsweise von 50 bis 1000 mPa.s auf. Besonders bevorzugt handelt es sich bei der Polyisocyanatkomponente B) um Polyisocyanate oder Polyisocyanatgemische mit ausschließlich aliphatisch und/oder cycloaliphatisch gebundenen Isocyanaten einer zwischen 2,2 und 5,0 liegenden (mittleren) NCO-Funktionalität und einer Viskosität bei 23°C von 50 bis 500 mPa.s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, daß in den letztendlich erhaltenen erfindungsgemäßen Beschichtungsmitteln maximal 20 Gew.-% Lösungsmittel, bezogen auf die Menge an Wasser vorliegt, wobei auch das gegebenenfalls in den Polyesterdispersionen oder -lösungen noch vorliegende Lösungsmittel mit in die Berechnung eingeht.

Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Bis(isocyanatocyclohexyl)-methan, insbesondere solche, welche ausschließlich auf Hexamethylendiisocyanat basieren.

Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 31 24 605, 33 58 010, 39 03 126, 39 03 127 oder 39 76 622 erhalten werden können, und die aus Gemischen von N,N',N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 43 24 879 erhalten werden können, und die im wesentlichen aus N,N',N"-Tris-(6-isocyanatahexyl)- isocyanurat im Gemisch mit untergeordneten Mengen an seinen höheren Homologen bestehen.

Insbesondere bevorzugt werden den genannten Kriterien entsprechende Gemische aus Uretdion- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische seiner Viskosität bei 23°C von 50 bis 500 mPa.s und einer zwischen 2,2 und 5,0 liegenden NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden.

Weitere aromatische Lackpolyisocyanate sind beispielsweise die Trimerisate der beispielhaft genannten monomeren Diisocyanate, d.h. die entsprechenden Isocyanatoisocyanurate, die ebenfalls im Anschluß an ihre Herstellung vorzugsweise destillativ von überschüssigen monomeren Diisocyanaten befreit worden sind.

In vielen Fallen ist der Einsatz von hydrophilierten Polyisocyanaten besonders empfehlenswert. Hiermit wird die Emulgierung des Polyisocyanats in die wäßrige Phase erleichtert und in einigen Fällen eine zusätzliche Erhöhung der Standzeit bewirkt. Solche hydrophilierten Polyisocyanate werden z.B. durch Umsetzung von Di- oder Polyisocyanaten mit monofunktionellen Polyethern aus Ethylenoxid und gegebenenfalls Propylenoxid und/oder durch Einbau von Carboxylatgruppen durch Umsetzung mit Hydroxylgruppen enthaltenden Carbonsäuren, z.B. 2,2-Dimethylolpropionsäure oder Hydroxypivalinsäure und deren Neutralisation vor oder nach der Umsetzung, enthalten.

Die Polyisocyanatkomponente B) kann im übrigen aus beliebigen Gemischen der beispielhaft genannten Polyisocyanate bestehen.

Zur Herstellung der gebrauchsfertigen Beschichtungsmittel wird die Polyisocyanatkomponente B) in der wäßrigen Dispersion A) emulgiert, wobei die gelöste bzw. dispergierte Komponente A) gleichzeitig die Funktion eines Emulgators für das zugesetzte Polyisocyanat übernimmt.

Die Durchmischung kann durch einfaches Verrühren bei Raumtemperatur erfolgen. Die Menge der Polyisocyanatkomponente wird dabei so bemesen, daß ein NCO/OH-Äquivalentverhältnis, bezogen auf die Isocyanatgruppen der Komponente B) und die alkoholischen Hydroxylgruppen der Komponente A) von 0,2:1 bis 5:1, vorzugsweise 0,5:1 bis 2:1, resultiert. Vor der Zugabe der Polyisocyanatkomponente B) können der Polyolkomponente A), d.h. der Dispersion bzw. Lösung der Polyole die üblichen Hilfs- und Zusatzmittel der Lacktechnologie einverleibt werden. Hierzu gehören beispielsweise Entschäumungsmittel, Verlaufhilfsmittel, Pigmente, Dispergierhilfsmittel für die Pigmentverteilung und dgl..

Die so erhaltenen erfindungsgemäßen Beschichtungsmittel eignen sich für praktisch alle Einsatzgebiete, in denen heute lösemittelhaltige, lösemittelfreie oder andersartige wäßrige Anstrich- und Beschichtungssysteme mit einem erhöhten Eigenschaftsprofil Verwendung finden, z.B. Beschichtung praktisch aller mineralischer Baustoff-Oberflächen wie Kalk- und/oder Zement-gebundene Putze, Gips enthaltende Oberflächen, Faser-Zement-Baustoffe, Beton; Lackierung und Versiegelung von Holz und Holzwerkstoffen wie Spanplatten, Holzfaserplatten sowie Papier; Lackierung und Beschichtung metallischer Oberflächen; Beschichtung und Lackierung asphalt- und bitumenhaltiger Straßenbeläge; Lackierung und Versiegelung diverser Kunststoffoberflächen; Beschichtung von Leder und Textilien; außerdem sind sie zur flächigen Verklebung diverser Werkstoffe geeignet, wobei gleichartige und unterschiedliche Werkstoffe miteinander verbunden werden.

Die Härtung bzw. Vernetzung des Zweikomponenten-Systems kann nach Applikation auf dem jeweiligen Substrat bei Temperaturen von 0 bis 300°C, vorzugsweise zwischen Raumtemperatur und 200°C, erfolgen.

In den nachfolgenden Beispielen beziehen sich alle Prozentangaben auf Gewichtsprozente.

### Beispiele

### Ausgangsmaterialien:

### Polyisocyanat 1

Gemisch aus 70 Gew.-Teilen eines Uretdiongruppen aufweisenden, also dimerisierten Hexamethylendiisocyanats mit zwei endständigen, freien NCO-Gruppen und 30 Gew.-Teilen des im wesentlichen zum N,N',N"-Tris(6-iso- cyanatohexyl)-isocyanurat trimerisierten Hexamethylendiisocyanats im Gemisch mit untergeordneten Mengen an höheren Homologen beider Produkte; Polyisocyanat 1 besitzt in seiner 100 %igen, also lösemittelfreien Lieferform eine durchschnittliche Viskosität von 200 mPa.s/23°C und einen durchschnittlichen Gehalt an freien NCO-Gruppen von 22,5 %.

### Herstellung einer Polyesterpolyolkomponente A1)

In ein 6-1-Reaktionsgefäß mit Rühr-, Kühl- und Heizvorrichtung und Wasserabscheider werden 1623 g Trimethylolpropan, 1093 g Isophthalsäure, 1185 g Prifrac® 2950 (gesättigte Fettsäure, Fa. Unichema), 383 g Neopentylglykol und 608 g Hexahydrophthalsäureanhydrid eingewogen und unter Durchleiten von Stickstoff in einer Stunde auf 140°C aufgeheizt. Dann wird in 3 Stunden auf 150°C und in 7 Stunden auf 220°C aufgeheizt. Es wird solange unter Wasserabspaltung kondensiert, bis der Polyester eine Gesamtsäurezahl von 2,8 und eine OH-Zahl von 216 aufweist.

In ein 2-1-Reaktionsgefäß mit Rühr-, Kühl- und Heizvorrichtung werden 830 g des vorstehend beschriebenen Polyesters, 40 g Dimethylolpropionsäure, 75,3 g N-Methylpyrrolidon (NMP) und 1,25 g Dibutylzinndioctoat eingewogen und unter N₂-Atmosphäre bei 120°C homogenisiert. Nach Abkühlen auf 80°C werden 130 g Isophorondiisocyanat auf einmal zugegeben. Die Reaktionsmischung wird bei 120°C gerührt, bis keine NCO-Gruppen mehr nachweisbar sind. Der so erhaltene Urethan-, Carboxyl- und Hydroxylgruppen enthaltende Polyester wird so in einem NH₃/Wassergemisch dispergiert, daß eine wäßrige Dispersion der Polyesterpolyolkomponente Al) mit einem Festkörpergehalt von ca. 48,5 %, einem pH-Wert von ca. 7,4, einem Neutralisationsgrad von 100 %, einer Säurezahl von ca. 10 und einem Hydroxylgruppengehalt von ca. 4,6 erhalten wird.

### Herstellung einer Polyesterpolyolkomponente A2)

In ein 2-1-Reaktionsgefäß mit Rühr-, Kühl- und Heizvorrichtung sowie Wasserabscheider werden unter N₂-Atmosphäre 152,0 g Hexandiol, 130 g Neopentylglykol, 50 g 1,4-Cyclohexandimethanol, 164 g Trimethylolpropan, 279 g Phthalsäureanhydrid und 225 g Hexahydrophthalsäureanhydrid eingewogen und in 2 Stunden auf 160°C aufgeheizt. Anschließend wird in 10 Stunden auf 220°C aufgeheizt und dabei kontinuierlich N₂ durchgeleitet. Es wird solange verestert, bis die Säurezahl ca. 4 beträgt. Nach dem Abkühlen auf 120°C werden auf einmal 106,8 g Tetrahydrophthalsäureanhydrid zugegeben und bei 120 bis 130°C gehalten, bis die Gesamtsäurezahl ca. 45 beträgt. Anschließend werden 200 g Dimethyldiglykol und 50 g NMP zugegeben und die Harzschmelze in einem wasser/Triethylamingemisch bei ca. 80°C dispergiert. Die wäßrige Polyesterdispersion A2) hat dann einen Festgehalt von ca. 38 %, der Neutralisationsgrad beträgt ca. 90 %. Der Hydroxylgruppengehalt ist ca. 3,5 %.

### Herstellung einer Polyesterpolyolkomponente A3)

In ein 5-1-Reaktionsgefäß mit Rühr-, Kühl- und Heizvorrichtung sowie Wasserabscheider werden 280 g Neopentylglykol, 180 g Trimethylolpropan, 317 g 1,6-Hexandiol, 265 g Phthalsäureanhydrid, 82,5 g 5-(Lithiumsulfo)isophthalsäure und 0,75 g Dibutylzinnoxid eingewogen und unter N₂-Atmosphäre in 1 Stunde auf 175°C aufgeheizt. Es wird so lange bei 175°C verestert, bis die Lösung klar geworden ist, anschließend werden 478 g Phthalsäureanhydrid zugesetzt und auf 200°C erhitzt. Es wird so lange erhitzt, bis eine Säurezahl ≤10 erreicht ist. Nach dem Abkühlen auf 100°C wird langsam destilliertes Wasser zugegeben und bei 60°C 2 Stunden dispergiert. Man erhält eine wäßrige Dispersion eines Sulfonat- und Hydroxylgruppen enthaltenden Polyesterharzes A3), welches einen Festkörpergehalt von ca. 35 % und einen Hydroxylgruppengehalt von etwa 4,8 % aufweist.

### Herstellung eines Polymerisatharzes A4)

In einem 3-1-Rührautoklaven mit Rückflußkühler, wirksamem Rührer, sowie Gaseinlaß- und -auslaß werden 900 g Essigsäure-n-butylester vorgelegt und mit Stickstoff gespült. Anschließend wird Stickstoff in einem stetigen Strom übergeleitet und die Vorlage unter Rühren bei ca. 200 U/min auf eine Innentemperatur von 110°C erwärmt. Anschließend wird eine Mischung aus 459 g Methacrylsäure-2-hydroxyethylester, 231 g Methacrylsäuremethylester, 600 g Acrylsäure-n-butylester, 150 g Acrylsäure und 50 g Azoisobutyronitril im Verlauf von 4 Stunden gleichmäßig zudosiert. Nach beendetem Zulauf wird ca. 30 min. nachgerührt und danach mit einer Mischung bestehend aus 10 g t-Butylperoctoat und 100 g Essigsäure- n-butylester nachaktiviert. Die Nachreaktionszeit beträgt 6 Stunden. Anschließend werden bei einem Vakuum von ca. 200 bis 400 mbar ca. 100 ml Restmonomere zusammen mit dem Lösungsmittel (Essigsäure-n-butylester) abdestilliert. Die abdestillierte Menge wird durch frisches Lösungsmittel ersetzt. Die im organischen Lösungsmittel gelösten Polymerisatharze besitzen folgende physikalisch-chemische Daten:
- Konzentration:: 58,9 Gew.-%
- Viskosität (23°C):: 6,0 Pa.s
- OH-Zahl:: 79,7
- Säurezahl:: 46,6

Um die organische Lösung in eine wäßrige Lösung bzw. Dispersion zu überführen, wird in einem 8 l-Reaktor eine Mischung bestehend aus 3500 g entionisiertem Wasser und 143 g wäßriger Ammoniaklösung (25 %) vorgelegt und unter Rühren auf ca. 95°C erwärmt. Anschließend wird die organische Polymerisatlösung im Verlauf von ca. 0,5 Stunden zudosiert und gleichzeitig Essigsäure-n-butylester durch Azeotropdestillation entfernt. Die Menge an abdestilliertem Wasser wird dabei kontinuierlich ersetzt. Mit einer ca. 25 %igen wäßrigen Ammoniaklösung wird ein pH-Wert von 7,0 eingestellt. Der Feststoffgehalt wird auf 30 % eingestellt, Die physikalisch-chemischen Daten der wäßrigen Lösung bzw. Dispersion lauten wie folgt:
Feststoffgehalt: 30 %
Carboxylatgruppen: 139 Milliäquivalente/100 g Feststoff Hydroxylgruppengehalt (bezogen auf Feststoff): 4,6 %

### Herstellung eines acrylatgepfropften Polyesters Komponente A5)

In ein 6-1-Reaktionsgefäß mit Rühr-, Kühl- und Heizvorrichtung und Wasserabscheider werden 771,8 g Trimethylolpropan, 476,1 g Phthalsäureanhydrid, 63,3 g Maleinsäureanhydrid, 939,3 g Adipinsäure, 759,0 g 1,6- Hexandiol und 669,2 g Neopentylglykol eingewogen und unter Durchleiten von Stickstoff in einer Stunde auf 140°C aufgeheizt. Dann wird in 6 Stunden auf 200°C aufgeheizt und so lange unter Wasserabspaltung kondensiert, bis die Säurezahl unter 12 mg KOH/g Substanz gesunken ist. Dann werden 321,4 g Prifrac® 2950 (Unichema International) zugegeben und so lange bei 200°C unter Wasserabspaltung kondensiert, bis der Polyester eine Gesamtsäurezahl von 2,0 und eine OH-Zahl von 298 aufweist.

In einem 2-l-Reaktionsgefäß mit Rühr-, Kühl- und Heizvorrichtung werden 166,7 g der Polyestervorstufe und 36,7 g Butylglykol eingewogen und auf 125°C aufgeheizt. Zu der Polyesterlösung wird innerhalb von 2 Stunden eine Mischung aus 83,3 g n-Butylacrylat, 100,0 g Hydroxyethylmethacrylat, 141,7 g Methylmethacrylat und 3,3 g n-Dodecylmercaptan zudosiert. Im Anschluß daran wird eine Mischung aus 41,7 g n-Butylacrylat, 50,0 g Hydroxyethylmethacrylat, 70,8 g Methylmethacrylat, 12,5 g Methacrylsäure und 1,7 g n-Dodecylmercaptan innerhalb 1 Stunde zugegeben. Beginnend mit der Monomerenzugabe werden parallel dazu 17,9 g tert.-Butylper- 2-ethylhexanoat (70 %ig in Kohlenwasserstoffgemisch) innerhalb von 4 Stunden zudosiert. Nach dem Ende der Peroxidzugabe wird noch 2 Stunden bei 125°C nachgerührt,

Das gepfropfte Polyesterharz wird mit 19,6 g Dimethylethanolamin neutralisiert und mit 780 g Wasser dispergiert. Durch Wasserzugabe wird ein Festgehalt von ca. 43,2 % eingestellt.

Das mit Vinylmonomeren gepfropfte Polyesterharz A5) hat einen OH-Gehalt von ca. 5,2 % und eine Säurezahl von ca. 18 mg KOH/g Festharz. Der Neutralisationsgrad beträgt ca. 100 %.

### Anwendungsbeispiele

### Beispiel 1

50 Gew.-Teile der wäßrigen Polyacrylat-Dispersion A4) werden mit 50 Gew.-Teilen der wäßrigen Dispersion des urethanisierten Polyesters A1) gemischt.

Zu dieser Dispersion A) werden 1,14 Gew.-Teile einer 20 gew.-%igen handelsüblichen Verdicker-Lösung in Wasser (Acrysol RM 8, Röhm und Haas, Frankfurt), 0,8 Gew.-Teile einer 25 gew.-%igen wäßrigen Lösung eines handelsüblichen Emulgators (Emulgator WN, Bayer AG, Leverkusen), 0,93 Gew.-Teilen eines handelsüblichen Entschäumers (Bevaloid 581 B, Erbsloh, Düsseldorf) und 4,9 Gew.-Teile demineralisiertes Wasser zugesetzt und homogenisiert. Die Zubereitung ist praktisch unbegrenzt lagerstabil. Zu der oben beschriebenen Zubereitung werden dann 28,88 Gew.-Teile Polyisocyanat 1 zugesetzt und durch einfaches Rühren vermischt. Dabei entsteht ein Zweikomponenten-Polyurethanlack in wäßriger Phase mit einer Verarbeitungszeit von ca. 5 Stunden. Das NCO/OH-Verhältnis beträgt 1,5.

Der in einer Naßfilmstärke von 200 µm (= ca. 50 µm trocken) applizierte Lack erscheint zunächst milchig trübe, wird aber innerhalb von 30 bis 60 Min. bei Raumtemperatur, also mit zunehmender Verdunstung des Wassers völlig klar und transparent.

Der aufgetragene Lackfilm hat eine Staubtrocknung von ca. 2 bis 3 Stunden. Die endgültige Aushärtung ist im Verlaufe von 10 bis 14 Tagen erreicht. Der ausgehärtete Lackfilm hat dann folgendes Eigenschaftsspektrum:

| | |
|---|---|
| Optik (Glanz/Transparenz): | sehr gut |
| Pendelhärte (Albert/König): | 100-120 Sek. |
| Löserbeständigkeit | |
| Testbenzin: | sehr gut |
| Solventnaphtha 100: | sehr gut |
| Methoxypropylacetat: | sehr gut |
| Aceton: | gut-mäßig |
| Ethanol: | gut |

Das gleiche Eigenschaftsprofil wird auch durch forciertes Trocknen bei erhöhten Temperaturen, z.B. 1 h bei 80 bis 100°C oder Einbrennen, z.B. 30 Min. bei 130 bis 150°C, erzielt.

### Beispiel 2

25 Gew.-Teile der Polyesterdispersion A1) werden mit 75 Gew.-Teilen der Polyacrylatdispersion A4) zu einer Polyolkomponente A) abgemischt. Wie in Beispiel 1 beschrieben, werden nun, jedoch in veränderten Gewichtsteilen, nämlich

| | |
|---|---|
| Verdicker-Lösung, 20 %ig | 1,7 Gew.-Teile |
| Emulgator-Lösung, 25 %ig | 0,7 Gew.-Teile |
| Entschäumer | 0,8 Gew.-Teile |
| Wasser | 6,0 Gew.-Teile |

zugesetzt und vermischt.

Zu der oben beschriebenen Zubereitung werden nun 24,44 Gew.-Teile Polyisocyanat 1 zugesetzt und durch einfaches Rühren homogenisiert. Dabei entsteht ein Zweikomponenten-Polyurethanlack in wäßriger Phase mit einer Verarbeitungszeit von ca. 5 Stunden. Das NCO/OH-Verhältnis beträgt 1,5.

Der in einer Naßfilmstärke von 200 µm (= ca. 50 µm trocken) applizierte wäßrige Zweikomponenten-Polyurethanlack erschient zunächst milchig trübe, er wird aber innerhalb von 30 bis 60 Minuten bei Raumtemperatur, also mit zunehmender Verdunstung des Wassers völlig klar und transparent. Die Staubtrocknung beträgt 2 bis 3 Stunden. Die endgültige Aushärtung ist nach 10 bis 14 Tagen erreicht. Der Lackfilm verfügt dann über folgendes Eigenschaftsspektrum:

| | |
|---|---|
| Optik (Glanz/Transparenz): | sehr gut |
| Pendelhärte: | 90-110 Sek. |
| Löserbeständigkeit | |
| Testbenzin: | sehr gut |
| Solventnaphtha 100: | sehr gut |
| Methoxypropylacetat: | sehr gut |
| Aceton: | gut-mäßig |
| Ethanol: | gut |

Hinsichtlich des Verhaltens bei forcierter Trocknung bzw. Einbrennhärte gelten die Aussagen von Beispiel 1.

### Beispiel 3

Beispiel 3 ist Beispiel 1 analog, aber mit dem Unterschied, daß die beiden Ausgangsstoffe nunmehr im Gewichtsverhältnis
Polyacrylat-Dispersion A4) 25 Gew.-%
Polyester-Dispersion A1) 75 Gew.-%
gemischt werden. Die Art und Menge der der so erhaltenen Polyolkomponente A) zugemischten Hilfs- und Zusatzmittel entspricht den in Beispiel 1 gemachten Angaben.

Als Komponente B) werden 32,87 Gew.-Teile Polyisocyanat 1, entsprechend einem NCO/OH-Äquivalentverhältnis von 1,5 zugesetzt.

Der ausgehärtete Lackfilm hat folgendes Eigenschaftsspektrum:

| | |
|---|---|
| Optik (Glanz/Transparenz): | sehr gut |
| Pendelhärte (Albert/König): | 80-100 Sek. |
| Löserbeständigkeit | |
| Testbenzin: | sehr gut |
| Solventnaphtha 100: | sehr gut |
| Methoxypropylacetat: | sehr gut |
| Aceton: | gut-mäßig |
| Ethanol: | gut |

Auch hier gelten die in Beispiel 1 gemachten Aussagen bezüglich der forcierten Trocknung bei erhöhten Temperaturen bzw. der Einbrennhärtung in vollem Umfang.

### Beispiel 4

Beispiel 4 entspricht dem Beispiel 3, mit dem Unterschied, daß anstelle der Polyacrylatdispersion A4) die gleiche Menge einer Polyesterdispersion A2) eingesetzt wird.

Der ausgehärtete Lackfilm hat folgendes Eigenschaftsspektrum:

| | |
|---|---|
| Optik (Glanz/Transparenz): | sehr gut |
| Pendelhärte: | ca. 80 Sek. |
| Löserbeständigkeit | |
| Testbenzin: | sehr gut |
| Solventnaphtha 100: | sehr gut |
| Methoxypropylacetat: | sehr gut |
| Aceton: | gut-mäßig |
| Ethanol: | gut-mäßig |

### Beispiel 5

Beispiel 5 entspricht dem Beispiel 2, mit dem Unterschied, daß anstelle der Polyesterdispersion A1) die gleiche Menge einer Polyesterdispersion A3) eingesetzt wird.

Der ausgehärtete Lackfilm hat folgendes Eigenschaftsspektrum:

| | |
|---|---|
| Optik (Glanz/Transparenz): | gut-sehr gut |
| Pendelhärte: | ca. 100 Sek. |
| Lösemittelbeständigkeit | |
| Testbenzin: | sehr gut |
| Solventnaphtha 100: | sehr gut |
| Methoxypropylacetat: | sehr gut-gut |
| Aceton: | gut-mäßig |
| Ethanol: | gut |

### Beispiel 6

Beispiel 6 entspricht dem Beispiel 3, mit dem Unterschied, daß anstelle der Polyesterdispersion A1) die gleiche Menge der Pfropfpolyesterdispersion A5) eingesetzt wird.

Der ausgehärtete Lackfilm hat folgendes Eigenschaftsspektrum:

| | |
|---|---|
| Optik (Glanz/Transparenz): | gut-sehr gut |
| Pendelhärte: | 120-130 Sek. |
| Lösemittelbeständigkeit | |
| Testbenzin: | sehr gut |
| Solventnaphtha 100: | sehr gut |
| Methoxypropylacetat: | gut-sehr gut |
| Aceton: | gut |
| Ethanol: | gut |

## Patentansprüche

1. Wäßrige Bindemittelkombirtation bestehend im wesentlichen aus:
A) einer wäßrigen Lösung oder Dispersion einer wasserverdünnbaren organischen Polyolkomponente und
B) einer Polyisocyanatkomponente einer Viskosität bei 23°C von 50 bis 10.000 mPa.s, bestehend aus mindestens einem organischen Polyisocyanat mit aliphatisch, cycloaliphatisch, araliphatisch und/oder aromatisch gebundenen, freien Isocyanatgruppen, welche in der Komponente A) emulgiert vorliegt, wobei das NCO/OH-Äquivalentverhältnis, bezogen auf die Isocyanatgruppen der Komponente B) und die Hydroxylgruppen der in A) vorliegenden Polyolkomponente, bei 0,2:1 bis 5:1 liegt,
**dadurch gekennzeichnet, daß** die in A) vorliegende, waaserverdünnbare Polyolkomponente eine Mischung von mindestens zwei Hydroxylgruppen aufweisenden Polymeren, ausgewählt aus A1), A2), A3), A4) und A5), darstellt, wobei
A1) Hydroxyl-, Urethan und Carboxylatgruppen enthaltende Polyesterharze mit einem Molekulargewicht Mw = 3.000 bis 100.000, einer Hydroxylzahl von 20 bis 240, einer Säurezahl, bezogen auf alle Carboxylgruppen, die dabei zu 25 bis 100% in der Salzform vorliegen, von 8 bis 60 und einem Urethangruppengehalt (-NH-CO-O-) von 1,0 bis 15,0 Gew.% umfaßt; die Polyesterharze A1 sind erhältlich durch Umsetzung von
a) 65 bis 94 Gew.-% eines Polyesterpolyols mit einer Hydroxylzahl von 50 bis 500 und einer Säurezahl ≤12,
b) 0 bis 35 Gew.% mindestens einer, von den Verbindungen a) und c) verschiedenen, Amino und/oder Hydroxylgruppen aufweisenden, im Sinne der Isocyanat-Additionsreaktion monobis tetrafunktionellen Verbindung des Molekulargewichtsbereichs von 32 bis 2000,
c) 2, 0 bis 7,5 Gew.% einer 2 ,2 -Bis (hydroxymethyl) alkancarbonsäure oder einer dieser Säuremenge entsprechende Menge eines t-Aminsalzes einer solchen Säure und
d) 5. bis 30 Gew. % mindestens einer, mindestens difunktionellen Isocyanatkomponente des Molekulargewichtsbereichs 168 bis 1500 oder durch Umsetzung von
e) 60 bis 97 Gew.-% eines Polyesterpolyols mit einer Hydroxylzahl von 50 bis 500 mg KOH/g Substanz und einer Säurezahl ≤ 12,
f) 2 bis 20 Gew.-% eines Di- und/oder Tri- und/oder Tetracarbonsaureanhydrids und
g) 0, 1 bis 20 Gew. % einer mindestens difunktionellen Isocyanatkomponente des Molekulargewichtsbereichs von 168 bis 1500
und jeweils zumindest teilweiser Neutralisation der Carboxylgruppen;
A2) Hydroxyl- und Carboxylatgruppen enthaltende, Urethangruppen- und Sulfonatgruppen-freie Polyesterharze mit einem Molekulargewicht Mw von 1.000 bis 50.000, einer Hydroxylzahl von 15 bis 240 und einer Säurezahl, bezogen auf alle Carboxylgruppen, die dabei zu 25 bis 100% in der Salzform vorliegen, von 15 bis 90 umfaßt; die Polyesterharze A2 sind erhältlich durch Umsetzung von
h) 75 bis 98 Gew.-% eines Polyesterpolyols mit einer Hydroxylzahl von 50 bis 500 mg KOH/g Substanz und einer Säurezahl ≤12 mg KOH/g Substanz und
i) 25 bis 2 Gew.-% eines Di- und/oder Tri- und/oder Tetracarbonsaureänhydrids und Neutralisation zumindest eines Teils der carboxylgruppen
A3) Hydroxyl- und Sulfonatgruppen, sowie gegebenenfalls Carboxylatgruppen und/oder Urethangruppen enthaltende Polyesterharze mit einem Molekulargewicht Mw von 1.000 bis 50.000, einer Hydroxylzah1 von 15 bis 240 und einer Säurezahl, bezogen auf alle Sulfonsäure- und gegebenenfalls Carboxylgruppen, die dabei zu 25 bis 100% in der Salzform vorliegen, von 3 bis 45 umfaßt; die Polyesterharze A3 sind erhältlich durch Umsetzung von
a1) 0 bis 60 Gew.-% an Monocarbonsäuren des Molekulargewichtsbereichs 112 bis 340,
a2) 10 bis 65 Gew.% Polycarbonsäuren des Molekulargewichtsbereichs 98 bis 600 oder Anhydriden derartiger Polycarbonsäuren,
a3) 5 bis 70 Gew.% an di- und höherfunktionellen -Alkoholen des Molekulargewichtsbereichs 62 bis 2000,
a4) 0 bis 30 Gew.-% einwertigen Alkoholen des Molekulargewichtsbereichs 100 bis 299,
a5) 0 bis 15 Gew.-% an Hydroxycarbonsäuren des Molekulargewichtsbereichs 90 bis 280 oder an Lactonen derartiger Hydroxycarbonsäuren,
a6) 0 bis 15 Gew.% an Aminoalkoholen des Molekulargewichtsbereichs 61 bis 300 und/oder an Aminocarbonsäuren des Molekulargewichtsbereichs 75 bis 260 und
a7) 0,5 bis 25 Gew.-% einer Sulfonatgruppen auf weisenden Aufbaukomponente, ausgewählt aus der Gruppe bestehend aus Sulfonatgruppen aufweisenden Alkoholen und Sulfonatgruppen aufweisenden aromatischen Carbonsäuren;
A4) Hydroxyl-, Carboxylat- und/oder Sulfonatgruppen enthaltende Polyacrylatharze mit einem Molekulargewicht Mw von 500 bis 100.000, einer Hydroxylzahl von 15 bis 270 und einer Säurezahl, bezogen auf alle Carboxyl- und Sulfonsäuregruppen, die zu 25 bis 100% in der Salzform vorliegen, von 5 bis 125 umfaßt; die Polyacrylatharze A4 sind erhältlich durch Copolymerisation von
m) 0,3 bis 30 Gew.% Carboxyl- und/oder Sulfonsäuregruppen aufweisenden Monomeren,
n) 3 bis 75 Gew.% hydroxyfunktionellen Monomeren und
o) 5 bis 90 Gew.% sonstigen, copolymerisierbaren Monomeren
und zumindest teilweiser Neutralisation der Saüregruppen;
A5) Hydroxyl-, Carboxylat- und/oder Sulfonatgruppen enthaltende acrylatgepfropfte Polyesterharze mit einen Molekulargewicht Mw von 3.000 bis 100.000, einer Hydroxylzahl von 20 bis 300 mg KOH/g Substanz und einer Säurezahl, bezogen auf alle Carboxyl- bzw. Sulfonsäuregruppen, die dabei zu 25 bis 100% in Salzform vorliegen, von 5 bis 75 umfaßt; die acrylatgepropften Polyesterharze A5 sind erhältlich indem man
p) 95 bis 10 Gew.% einer Monomerenmischung enthaltend
m) α,β-ungesättigte Carbonsäuren,
n) α,β-ungesättigte hydroxyfunktionelle Monomere,
o) sonstige copolymerisierbare Monomere in Gegenwart von
q) 5 bis 90 Gew.% eines Polyesterpolyols mit einer Hydroxylzahl von 10 bis 500, einer Säurezahl von maximal 30 und einem Gehalt an olefinischen Doppelbindungen (berechnet als C=C, Molekulargewicht=24) von 0 bis 10 Gew,% einer Pfropfcopolymerisation unterzieht, wobei sich die Prozentangaben zu 100 Gew.-% ergänzen ;
wobei in der Polyolkomponente mindestens zwei Vertreter unterschiedlicher Gruppen A1) bis A5) zu jeweils mindestens 5 Gew.% vertreten sind.

2. Bindemittelkombination gemäß Anspruch 1, **dadurch gekennzeichnet, daß** die Polyisocyanatkomponente B) aus einem oder mehreren organischen Polyisocyanaten mit ausschließlich (cyclo) aliphatisch gebundenen Isocyanatgruppen besteht.

3. Bindemittelkombination gemäß den Ansprüchen 1 oder 2, **dadurch gekennzeichnet, daß** die Polyisocyanatkomponente B) in mit monofunktionellen Polyethern und/oder Carboxylatgruppen hydrophilierter Form eingesetzt wird.

4. Verfahren zur Herstellung von Bindemittelkombinationen gemäß einem der Ansprüche 1 bis 3, **dadurch gekennzeichnet, daß** in einer wäßrigen Lösung oder Dispersion einer Polyolkomponente A), die ein Gemisch von wenigstens zwei Einzelkomponenten, ausgewählt aus A1), A2), A3), A4) und A5), der in Anspruch 1 genannten Art darstellt, eine Polyisocyanatkomponente einer viskosität bei 23°C von 50 bis 10.000 mPa.s, bestehend aus mindestens einem organischen Polyisocyanat mit aliphatischen, cycloaliphatischen, aralipathischen und/oder aromatisch gebundenen freien Isocyanatgruppen, emulgiert wird, wobei die Mengenverhältnisse der beiden Komponenten einem NCO/OH-Äguivalentverhältnis, bezogen auf die Isocyanatgruppen der Polyisocyanatkomponente und die eingebauten Hydroxylgruppen der Polyolkomponente, von 0,2:1 bis 5:1 entsprechen und wobei die gegebenenfalls mitverwendeten Hilfs- und Zusatz- und gegebenenfalls reaktiven Verdünnungsmittel der Polyollösung und/oder -dispersion vor der Zugabe der Polyisocyanatkomponente einverleibt worden sind.

5. Verwendung einer Bindemittelkombination gemäß den Ansprüchen 1 bis 4 als Bindemittel für Lacke, Beschichtungs- und Dichtmassen, sowie für Klebstoffe.

## Claims

1. An aqueous binder combination substantially comprising:
A) an aqueous solution or dispersion of a water-dilutable organic polyol component and
B) a polyisocyanate component with a viscosity at 23°C of 50 to 10,000 mPa..s, consisting of at least one organic polyisocyanate, with aliphatically, cycloaliphatically, araliphatically and/or aromatically bonded free isocyanate groups, that is present emulsified in component. A), wherein the ratio by equivalents of NCO to OH, with respect to the isocyanate groups in component B) and the hydroxyl groups in the polyol component present in component A), is 0.2:1 to 5:1,
**characterised in that**, the water-dilutable polyol component present in A) is a mixture of at least two polymers containing hydroxyl groups, selected from A1), A2), A3), A4) and A5), wherein
A1) comprises polyester resins containing hydroxyl, urethane and carboxylate groups with a molecular weight Mw = 3,000 to 100,000, a hydroxyl value of 20 to 240, an acid value, with respect to all the carboxyl groups, 25 to 100 % of which are in the salt form, of 8 to 60 and a urethane (-NH-C-O-) group content of 1..0 to 15..0 wt.%; polyester resins A1 being obtainable by reacting
a) 65 to 94 wt.% of a polyester polyol with a hydroxyl value of 50 to 500 and an acid value ≤12,
b) 0 to 35 wt.% of at least one compound that is different from compounds a) and c) and is a mono- to tetrafunctional compound, in the sense of the isocyanate addition reaction, that contains amino and/or hydroxyl groups and has a molecular weight in the range 32 to 2000,
c) 2..0 to 7..5 wt.% of a 2,2-bis(hydroxymethyl)-alkanoic acid or an amount of a t-amine salt of such an acid that corresponds to this amount of acid and
d) 5 to 30 wt.% of an at least difunctional isocyanate component with a molecular weight in the range 168 to 1500
or by reacting
e) 60 to 97 wt.% of a polyesterpolyol with an hydroxyl value of 50 to 500 mg KOH/g of substance and an acid value ≤ 12,
f) 2 to 20 wt.% of a di- and/or tri- and/or tetracarboxylic anhydride and
g) 0.1 to 20 wt.% of an at least difunctional isocyanate component with a molecular weight in the range 168 to 1500 and in each case at least partial neutralisation of the carboxyl groups;
A2) comprises polyester resins containing hydroxyl and carboxylate groups but no urethane or sulfonate groups, with a molecular weight Mw of 1000 to 50,000, a hydroxyl value of 15 to 240 and an acid value, with respect to all the carboxyl groups, 25 to 100 % of which are in the salt form, of 15 to 90; polyester resins A2 being obtainable by reacting
h) 75 to 98 wt..% of a polyesterpolyol with a hydroxyl value of 50 to 500 mg KOH/g of substance and an acid value ≤ 12 mg KOH/g of substance and
i) 25 to 2 wt.% of a di- and/or tri- and/or tetracarboxylic anhydride and neutralisation of at least some of the carboxyl groups
A3) comprises polyester resins containing hydroxyl and sulfonate groups and optionally carboxylate groups and/or urethane groups with a molecular weight Mw of 1000 to 50,000, a hydroxyl value of 15 to 240 and an acid value, with respect to all the sulfonic acid and optional carboxyl groups, 25 to 100 % of which are in the salt form, of 3 to 45; polyester resins A3 being obtainable by reacting
a1) 0 to 60 wt.% of monocarboxylic acids with a molecular weight in the range 112 to 340,
a2) 10 to 65 wt.% of polycarboxylic acids with a molecular weight in the range 98 to 600 or anhydrides of these types of polycarboxylic acids,
a3) 5 to 70 wt.% of dihydric or higher-functional alcohols with a molecular weight in the range 62 to 2000,
a4) 0 to 30 wt..% of monohydric alcohols with a molecular weight in the range 100 to 299,
a5) 0 to 15 wt.,% of hydroxycarboxylic acids with a molecular weight in the range 90 to 280 or of lactones of these types of hydroxycarboxylic acids,
a6) 0 to 15 wt.% of aminoalcohols with a molecular weight in the range 61 to 300 and/or of aminocarboxylic acids with a molecular weight in the range 75 to 260 and
a7) 0.5 to 25 wt.% of a chain-extension component that contains sulfonate groups, chosen from the group comprising alcohols containing sulfonate groups and carboxylic acids containing sulfonate groups;
A4) comprises polyacrylate resins containing hydroxyl, carboxylate and/or sulfonate groups with a molecular weight Mw of 500 to 100,000, a hydroxyl value of 15 to 270 and an acid value, with respect to all carboxyl and sulfonic acid groups, 25 to 100 % of which are in the salt form, of 5 to 125; polyacrylate resins A4 being obtainable by copolymerising
m) 0.3 to 30 wt..% of monomers containing carboxyl and/or sulfonic acid groups,
n) 3 to 75 wt.% of hydroxy-functional monomers and
o) 5 to 90 wt..% of other, compolymerisable, monomers
and at least partial neutralisation of the acid groups;
A5) comprises acrylate grafted polyester resins containing hydroxyl, carboxylate and/or sulfonate groups with a molecular weight Mw = 3000 to 100,000, a hydroxyl value of 20 to 300 mg KOH/g of substance and an acid value, with respect to all carboxyl and/or sulfonic acid groups, 25 to 100 % of which are in the salt form, of 5 to 75; acrylate graft polyester resins A5 being obtainable by subjecting
p) 95 to 10 wt.% of a monomer mixture containing
m) α,β-unsaturated carboxylic acids,
n) α,β-unsaturated hydroxy-functional monomers,
o) other copolymerisable monomers in the presence of
q) 5 to 90 wt.% of a polyester polyol with a hydroxyl value of 10 to 500, and acid value of at most 30 and a concentration of olefinic double bonds (calculated as C=C, molecular weight = 24) of 0 to 10 wt.%
to a graft copolymerisation, wherein the percentage data add up to 100 wt.%;
wherein at least 5 wt.% of each of two representatives from the different groups A1) to A5) are present in the polyol component

2. A binder combination according to Claim 1, **characterised in that** polyisocyanate component B) consists of one or more organic polyisocyanates with exclusively (cyclo) aliphatically bonded isocyanate groups.

3. A binder combination according to Claim 1 or 2, **characterised in that** polyisocyanate component B) is used in a form which has been hydrophilised using monofunctional polyethers and/or carboxylate groups.

4. A process for preparing binder combinations according to one of Claims 1 to 3, **characterised in that** a polyisocyanate component with a viscosity at 23°C of 50 to 10,000 mPa..s, consisting of at least one organic polyisocyanate with aliphatically, cycloaliphatically, araliphatically and/or aromatically bonded free isocyanate groups, is emulsified in an aqueous solution or dispersion of a polyol component A) which is a mixture of at least two separate components, chosen from A1), A2), A3), A4) and A5), of the type mentioned in Claim 1, wherein the ratio of amounts of the two components corresponds to a ratio by equivalents of NCO to OH, with respect to the isocyanate groups in the polyisocyanate component and the hydroxyl groups incorporated into the polyol component, of 0.2:1 to 5:1 and wherein optionally used auxiliary substances and additives and optional reactive diluents have been assimilated by the polyol solution and/or dispersion before adding the polyisocyanate component.

5. Use of a binder combinations according to Claims 1 to 4 as a binder for lacquers, coating and sealing compositions and for adhesives.

## Revendications

1. Liant combiné aqueux consistant essentiellement en
A) une solution ou dispersion aqueuse d'un composant polyol organique diluable à l'eau et
B) un composant polyisocyanate ayant une viscosité à 23°C de 50 à 10 000 mPa.s, qui consiste en au moins un polyisocyanate organique à groupes isocyanate libres à liaisons aliphatiques, cycloaliphatiques, araliphatiques et/ou aromatiques à l'état émulsionné dans le composant A), avec un rapport de 0,2:1 à 5:1 entre les équivalents de groupes isocyanate du composant B) et les équivalents de groupes hydroxy du composant polyol de A),
**caractérisé en ce que** le composant polyol diluable à l'eau de A) est un mélange d'au moins deux polymères portant des groupes hydroxy, choisis dans les groupes A1), A2), A3), A4) et A5) ci-après :
A1) des résines de polyester portant des groupes hydroxy, uréthane et carboxylate, et à un poids moléculaire Mw = 3 000 à 100 000, un indice d'hydroxyle de 20 à 240, un indice d'acide rapporté à tous les groupes carboxyle qui sont pour 25 à 100 % à l'état de sel, de 8 à 60, et une teneur en groupes uréthane (-NH-CO-O-) de 1,0 à 15,0 % en poids ; les résines de polyester A1 peuvent être obtenues par réaction de
a) 65 à 94 % en poids d'un polyesterpolyol d'indice d'hydroxyle 50 à 500 et d'indice d'acide ≤ 12,
b) 0 à 35 % en poids d'au moins un composé mono- à tétra-fonctionnel au sens de la réaction d'addition des isocyanates, à un poids moléculaire de 32 à 2 000, différant des composés a) et c) et contenant des groupes amino et/ou hydroxy,
c) 2,0 à 7,5 % en poids d'un acide 2,2-bis-(hydroxyméthyl)alcane-carboxylique ou de la quantité correspondante, par les proportions, d'un sel de tert-amine d'un tel acide et
d) 5 à 30 % en poids d'au moins un composant isocyanate, au moins difonctionnel de poids moléculaire 168 à 1 500,
ou par réaction de
e) 60 à 97 % en poids d'un polyesterpolyol d'indice d'hydroxyde de 50 à 500, de préférence 80 à 350 mg de KOH/g de substance et d'indice d'acide ≤ 12,
f) 2 à 20 % en poids d'un anhydride d'acide di- et/ou tri- et/ou tétra-carboxylique et
g) 0,1 à 20 % en poids d'au moins un composant isocyanate, au moins difonctionnel, de poids moléculaire 168 à 1 500,
suivie dans chaque cas de la neutralisation au moins partielle des groupes carboxyle ;
A2) des résines de polyester contenant des groupes hydroxy et carboxylate mais exemptes de groupes uréthane et de groupes sulfonate, à un poids moléculaire Mw de 1 000 à 50 000, un indice d'hydroxyle de 15 à 240 et un indice d'acide, rapporté à tous les groupes carboxyle qui sont pour 25 à 100 % à l'état de sel, de 15 à 90 ; les résines de polyester A2 peuvent être obtenues par réaction de
h) 75 à 98 % en poids d'un polyesterpolyol d'indice d'hydroxyle de 50 à 500 mg de KOH/g de substance et à un indice d'acide inférieur ou égal à 12 mg de KOH/g de substance et
i) 25 à 2 % en poids d'un anhydride d'acide di- et/ou tri- et/ou tétra-carboxylique,
et la neutralisation d'une partie au moins des groupes carboxyle ;
A3) des résines de polyester contenant des groupes hydroxy et sulfonate et, le cas échéant, des groupes carboxylate et/ou des groupes uréthane, à un poids moléculaire Mw de 1 000 à 50 000, un indice d'hydroxyle de 15 à 240 et un indice d'acide, rapporté à tous les groupes acide sulfonique et, le cas échéant, carboxyle, qui sont pour 25 à 100 % à l'état de sel, de 3 à 45 ; les résines de polyester A3 peuvent être obtenues par réaction de
a1) 0 à 60 % en poids d'acides monocarboxyliques de poids moléculaire 112 à 340,
a2) 10 à 65 % en poids d'acides polycarboxyliques de poids moléculaire 98 à 600 ou de leurs anhydrides,
a3) 5 à 70 % en poids d'alcools difonctionnels et à plus forte fonctionnalité de poids moléculaire 62 à 2 000,
a4) 0 à 30 % en poids d'alcools monovalents de poids moléculaire 100 à 299,
a5) 0 à 15 % en poids d'acides hydroxycarboxyliques de poids moléculaire 90 à 280 ou leurs lactones,
a6) 0 à 15 % en poids d'aminoalcools de poids moléculaire 61 à 300 à et/ou d'acides aminocarboxyliques de poids moléculaire 75 à 260, et
a7) 0,5 à 25 % en poids d'un composant de synthèse portant des groupes sulfonate et choisi parmi les alcools portant des groupes sulfonate et les acides carboxyliques aromatiques portant des groupes sulfonate ;
A4) des résines de polyacrylates contenant des groupes hydroxy, carboxylate et/ou sulfonate, à un poids moléculaire Mw de 500 à 100 000, un indice d'hydroxyle de 15 à 270 et un indice d'acide, rapporté à tous les groupes carboxyle et acide sulfonique qui sont pour 25 à 100 % à l'état de sel, de 5 à 125 ; les résines de polyacrylate A4 peuvent être obtenues par copolymérisation de
m) 0,3 à 30 % en poids de monomères portant des groupes carboxyle et/ou acide sulfonique
n) 3 à 75 % en poids de monomères à fonctions hydroxy et
o) 5 à 90 % en poids d'autres monomères copolymérisables,
et neutralisation au moins partielle des groupes acide ;
A5) des résines de polyesters greffés par des acrylates, contenant des groupes hydroxy, carboxylate et/ou sulfonate, à un poids moléculaire Mw de 3 000 à 100 000, un indice d'hydroxyle de 20 à 300 mg de KOH/g de substance et un indice d'acide, rapporté à tous les groupes carboxyle et acide sulfonique, qui sont pour 25 à 100 % à l'état de sel, de 5 à 75 ; les résines de polyesters greffés par des acrylates A5 peuvent être obtenues en soumettant à une copolymérisation greffée
p) 95 à 10 % en poids d'un mélange de monomères contenant
m) des acides carboxyliques α,β-insaturés
n) des monomères α,β-insaturés à fonctions hydroxy,
o) d'autres monomères copolymérisables
en présence de
q) 5 à 90 % en poids d'un polyesterpolyol d'indice d'hydroxyle 10 à 500, indice d'acide maximum 30, teneur en doubles liaisons oléfiniques (exprimée en C=C, poids équivalent = 24) de 0 à 10 % en poids, les pourcentages indiqués se complétant à 100 % en poids ;
sous réserve que, dans le composant polyol, il y ait au moins deux représentants de groupes différents parmi les groupes A1) à A5), présents chacun en proportion d'au moins 5 % en poids.

2. Liant combiné selon la revendication 1, **caractérisé en ce que** le composant polyisocyanate B) consiste en un ou plusieurs polyisocyanates organiques à groupes isocyanate à liaisons exclusivement (cyclo)aliphatiques.

3. Liant combiné selon les revendications 1 ou 2, **caractérisé en ce que** le composant polyisocyanate B) est mis en oeuvre à l'état hydrophilisé par des polyéthers monofonctionnels et/ou des groupes carboxylate.

4. Procédé de préparation de liants combinés selon l'une des revendications 1 à 3, **caractérisé en ce que**, dans une solution ou dispersion aqueuse d'un composant polyol A) qui consiste en un mélange d'au moins deux composants individuels choisis dans les groupes A1), A2), A3), A4) et A5) définis dans la revendication 1, on émulsionne un composant polyisocyanate ayant une viscosité à 23°C de 50 à 10 000 mPa.s qui consiste en au moins un polyisocyanate organique à groupes isocyanate libres à liaisons aliphatiques, cycloaliphatiques, araliphatiques et/ou aromatiques, avec des proportions relatives des deux composants correspondant à un rapport de 0,2:1 à 5:1 entre les équivalents de groupes isocyanate du composant polyisocyanate et les équivalents de groupes hydroxy du composant polyol incorporés, et les produits auxiliaires et additifs et, le cas échéant, les diluants réactifs, éventuellement utilisés conjointement, étant incorporés à la solution et/ou dispersion du polyol avant l'addition du composant polyisocyanate.

5. Utilisation selon les revendications 1 à 4 en tant que liant pour des liants combinés des vernis, des produits de revêtement et des masses d'étanchéité, ainsi que pour des colles.
